# EUROPEAN PATENT APPLICATION

(11) **EP 4 300 639 A1**
(43) Date of publication of application: **03.01.2024**
(21) Application number: 22759847.1
(22) Date of filing: 25.02.2022
(51) Int. Cl.: H01M 8/04, H01M 8/2465, H01M 8/2475

(54) **FUEL CELL MODULE AND FUEL CELL DEVICE**

(30) Priority: 25.02.2021 JP 2021029223
(71) Applicant: Kyocera Corporation, Kyoto-shi Kyoto 612-8501 (JP)
(72) Inventor: SANO, Yoshihide, Kyoto-shi, Kyoto 612-8501 (JP); AONO, Tomotake, Kyoto-shi, Kyoto 612-8501 (JP); NAKAMURA, Ryuichi, Kyoto-shi, Kyoto 612-8501 (JP); FUTAGAMI, Keita, Kyoto-shi, Kyoto 612-8501 (JP)
(74) Representative: TBK
(86) International application number: PCT/JP2022/008088
(87) International publication number: WO 2022/181813

(57) **Abstract**

A fuel cell module 10 has a fuel cell stack 12 and an oxidant gas supply plate 11. The fuel cell stack 12 is arranged inside a housing 19. The oxidant gas supply plate 11 is arranged adjacent to the fuel cell stack 12 within the housing 19. The oxidant gas supply plate 11 has an inner space. The oxidant gas supply plate 11 is positioned separated away from an inner wall of the housing 19 on the first direction side so that a space on the fuel cell stack 12 side communicates with a space on the side opposite to the fuel cell stack 12 side. The oxidant gas supply plate 11 has a surface facing the fuel cell stack 12 and a surface on the opposite side of the fuel cell stack 12, both being connected directly or indirectly to the housing 19.

## Description

### CROSS-REFERENCE TO RELATED APPLICATIONS

This application claims priority of Japanese Patent Application No. 2021-029223 filed in Japan on February 25, 2021, the entire disclosure of which being incorporated herein by reference.

### TECHNICAL FIELD

The present disclosure relates to a fuel cell module and a fuel cell device.

### BACKGROUND OF INVENTION

A fuel cell module including a plate-like member having a hollow portion inside is known for supplying an oxidant gas to a fuel cell stack (see Patent Literature 1).

### CITATION LIST

### PATENT LITERATURE

Patent Literature 1: International Publication No. 2017/221790

### SUMMARY

A fuel cell module according to a first aspect includes: a housing; a fuel cell stack arranged within the housing; and an oxidant gas supply plate that is arranged adjacent to the fuel cell stack within the housing and that has an inner space for flowing an oxidant to be supplied to the fuel cell stack. The oxidant gas supply plate is positioned separated away from an inner wall of the housing on a first direction side so that a space of the oxidant gas supply plate on the fuel cell stack side communicates with a space of the fuel cell stack on the side opposite to the fuel cell stack side; the oxidant gas supply plate has a surface facing the fuel cell stack and a surface on the opposite side of the fuel cell stack, both being connected directly or indirectly to the housing.

A fuel cell device according to a second aspect includes a fuel cell module that has: a housing; a fuel cell stack arranged within the housing; and an oxidant gas supply plate that is arranged adjacent to the fuel cell stack within the housing and that has an inner space for flowing an oxidant to be supplied to the fuel cell stack, in which the oxidant gas supply plate is positioned separated away from an inner wall of the housing on a first direction side so that a space of the oxidant gas supply plate on the fuel cell stack side communicates with a space of the fuel cell stack on the side opposite to the fuel cell stack side; the oxidant gas supply plate has a surface facing the fuel cell stack and a surface on the opposite side of the fuel cell stack, both being connected directly or indirectly to the housing.

### BRIEF DESCRIPTION OF THE DRAWINGS

FIG. 1 is a cross-sectional view taken along the vertical direction of a fuel cell module according to a first embodiment.
FIG. 2 is a cross-sectional view of an oxidant gas supply plate of FIG. 1 taken along a traveling direction.
FIG. 3 is a front view of the oxidant gas supply plate of FIG. 1, when viewed from a first plate portion.
FIG. 4 is a cross-sectional view of the oxidant gas supply plate taken along the IV-IV line of FIG. 2.
FIG. 5 is a perspective view of an off-gas channel plate in a variation of the fuel cell module shown in FIG. 1.
FIG. 6 is a perspective view of the oxidant gas supply plate to which the off-gas channel plate of FIG. 5 is joined.
FIG. 7 is a front view of the oxidant gas supply plate to which the off-gas channel plate of FIG. 5 is joined.
FIG. 8 is a front view of the oxidant gas supply plate to which a variation of the off-gas channel plate of FIG. 7 is joined.
FIG. 9 is a cross-sectional view of the fuel cell module taken along the IX-IX line of FIG. 1.
FIG. 10 is a front view of a surface side of the second heat-insulating material of FIG. 1 on which a first groove is provided.
FIG. 11 is a cross-sectional view taken along the vertical direction of a variation of the fuel cell module in FIG. 1.
FIG. 12 is a conceptual diagram illustrating the shape of an introducing pipe in FIG. 1.
FIG. 13 is a cross-sectional view of the fuel cell module of the second embodiment taken along the vertical direction.
FIG. 14 is a perspective view of the oxidant gas supply plate of FIG. 13 when viewed from a second plate portion.
FIG. 15 is an exploded perspective view illustrating the configuration of the oxidant gas supply plate of FIG. 14.
FIG. 16 is a partially enlarged cross-sectional view of the oxidant gas supply plate of FIG. 14, taken along a cross section perpendicular to a width direction and enlarged in the vicinity of a third projection.
FIG. 17 is a front view of a variation of the oxidant gas supply plate illustrated in FIG. 14, when viewed from the second plate portion.
FIG. 18 is a cross-sectional view of the fuel cell module taken along a cross section perpendicular to the normal direction of the main surface of the oxidant gas supply plate to illustrate the configuration of an exhaust gas lead-out portion formed in the fuel cell module of FIG. 13.
FIG. 19 is a cross-sectional view of the fuel cell module taken along a cross section perpendicular to the normal direction of the main surface of the oxidant gas supply plate to illustrate the configuration of a first variation of the exhaust gas lead-out portion of FIG. 18.
FIG. 20 is a cross-sectional view of the fuel cell module taken along a cross section perpendicular to the normal direction of the main surface of the oxidant gas supply plate to illustrate the configuration of a second variation of the exhaust gas lead-out portion in FIG. 18.
FIG. 21 is a cross-sectional view taken along the vertical direction of the first variation of the fuel cell module of FIG. 13.
FIG. 22 is a cross-sectional view taken along the vertical direction of the second variation of the fuel cell module of FIG. 13.
FIG. 23 is a perspective view illustrating, in an exploded manner, an oxidant gas flow channel portion together with a first off-gas flow channel portion and a partition plate 520 that define a first off-gas flow channel of FIG. 13.
FIG. 24 is a front view of a first variation of the first off-gas flow channel portion of FIG. 23.
FIG. 25 is a front view of a second variation of the first off-gas flow channel portion of FIG. 23.
FIG. 26 is a front view of a variation of the oxidant gas supply plate of FIG. 1, when viewed from the second plate portion.

### DESCRIPTION OF EMBODIMENTS

Embodiments of a fuel cell module to which the present disclosure is applied are described below with reference to the drawings.

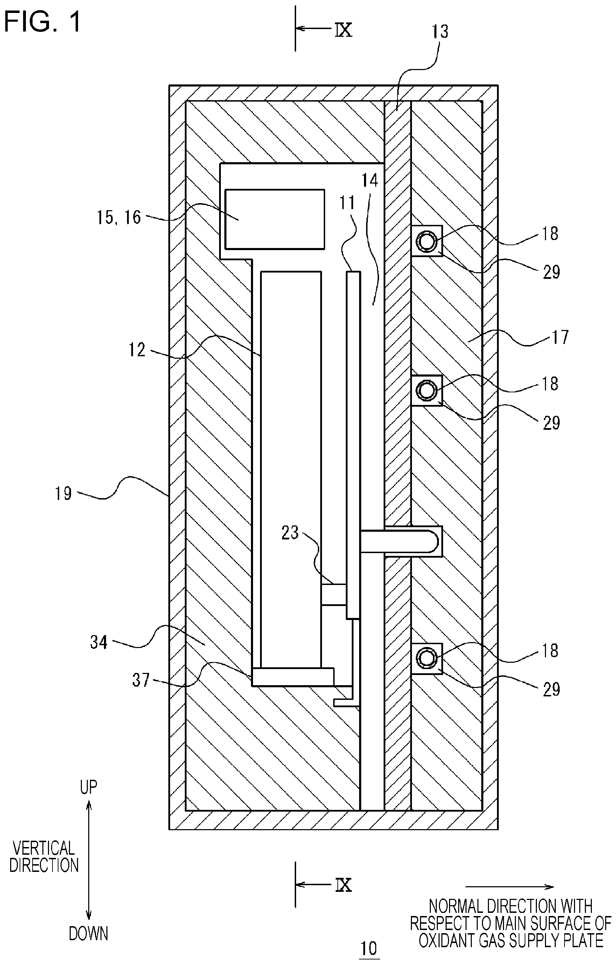

In a first embodiment of the present disclosure, a fuel cell device including a fuel cell module may include a mechanism for adjusting the amount of fuel gas and reforming water supplied to the fuel cell module, a mechanism for cooling the off-gas discharged from the fuel cell module, and the like. As shown in FIG. 1, a fuel cell module 10 of the first embodiment includes an oxidant gas supply plate 11. The fuel cell module 10 may further include a fuel cell stack 12, an opposite wall (first heat-insulating material) 13, a first off-gas flow channel 14, a reformer 15, a vaporizer 16, a second heat-insulating material 17, an oxidant gas flow channel portion 18, and a housing 19.

In the fuel cell module 10, the oxidant gas can be supplied to the fuel cell stack 12 from outside the fuel cell module 10 through the oxidant gas flow channel portion 18 and the oxidant gas supply plate 11. The fuel cell module 10 may also discharge the gas exhausted from the fuel cell stack 12 from the fuel cell module 10 via the first off-gas flow channel 14 and the second off-gas flow channel, which is to be described later.

The fuel cell device including the fuel cell module 10 has a predetermined posture relative to the ground surface at the time of installation. In the present description, the direction of the fuel cell module 10 in the fuel cell device that is vertically upward in the posture predetermined with respect to the ground surface is called an upward direction (first direction). In the present description, the direction of the fuel cell module 10 in the fuel cell device that is vertically downward in the predetermined posture with respect to the ground surface is called a downward direction.

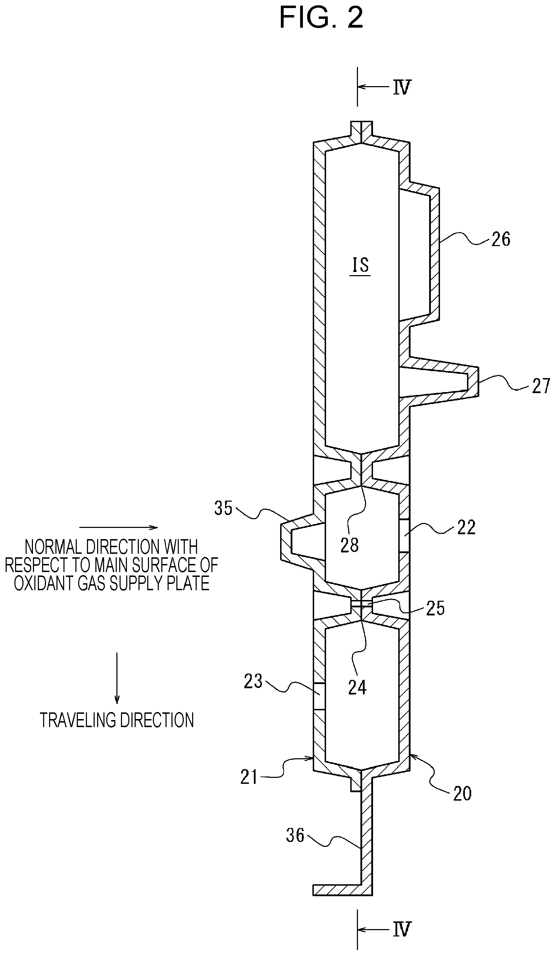

The oxidant gas supply plate 11, as a whole, may have a plate-like shape. More specifically, the oxidant gas supply plate 11, as a whole, may have a rectangular plate-like shape. As shown in FIG. 2, the oxidant gas supply plate 11 may have an inner space IS that allows flow of the oxidant to be supplied to the fuel cell stack 12. More specifically, the oxidant gas supply plate 11 may have a first plate portion 20 and a second plate portion 21 facing each other. The oxidant gas supply plate 11 may be formed by joining the outer periphery of the first plate portion 20 and the second plate portion 21 with a gap therebetween.

Since the oxidant gas supply plate 11 is exposed to high temperatures, it may be formed of a heat-resistant material such as a metal.

In the present description, the directions parallel to a main surface of the oxidant gas supply plate 11 and perpendicular to each other are called a traveling direction and a width direction. In the present description, the main surface is a surface of a thin plate that is much larger in area than the other surfaces. As described later, the oxidant gas supply plate 11 is arranged in the fuel cell module 10 so that the traveling direction is parallel to the direction in which the off-gas travels. The traveling direction and the width direction may be parallel to the sides of the main surface, which is rectangular.

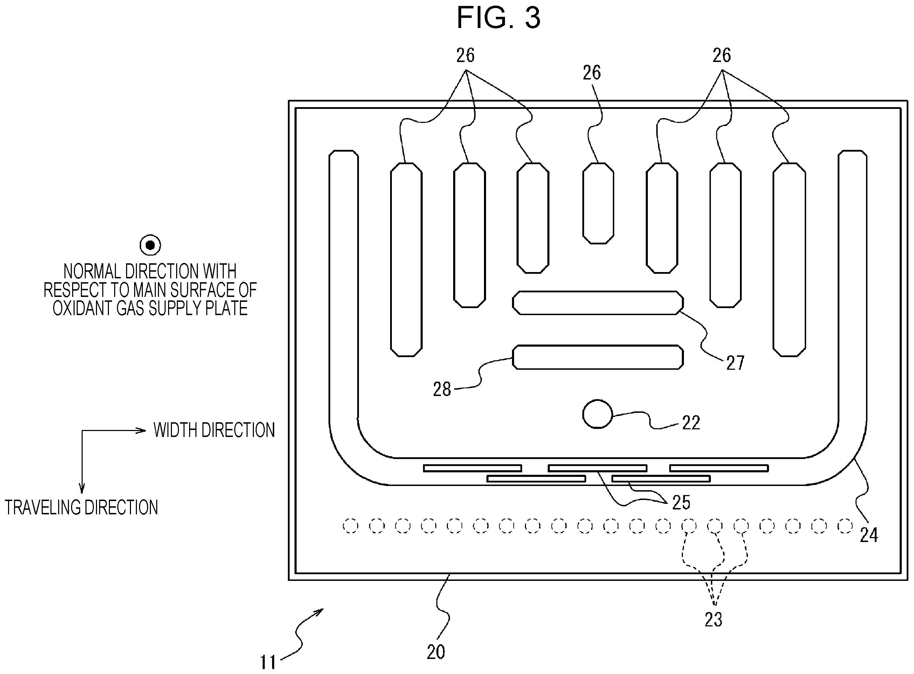

As shown in FIG. 3, the first plate portion 20 may have a supply plate inlet 22. The supply plate inlet 22 may be positioned in the vicinity of the center of the fuel cell stack 12 in the stacking direction of the cells within the fuel cell module 10. The supply plate inlet 22 may also be positioned closer to the traveling direction than the center in the traveling direction. The supply plate inlet 22 may also be positioned in the vicinity of the center in the width direction.

The second plate portion 21 may have, at a position opposite to the supply plate inlet 22, a first projection 35 protruding to the outward side, or in other words, protruding to the side opposite to the first plate portion 20. The first projection 35 may be recessed to the side opposite to the first plate portion 20. The second plate portion 21 may have a supply plate outlet 23. The supply plate outlet 23 may be arranged in the lower end portion of the side wall opposite to the fuel cell stack 12. A plurality of supply plate outlets 23 may be provided at intervals along a direction in which the cells arranged.

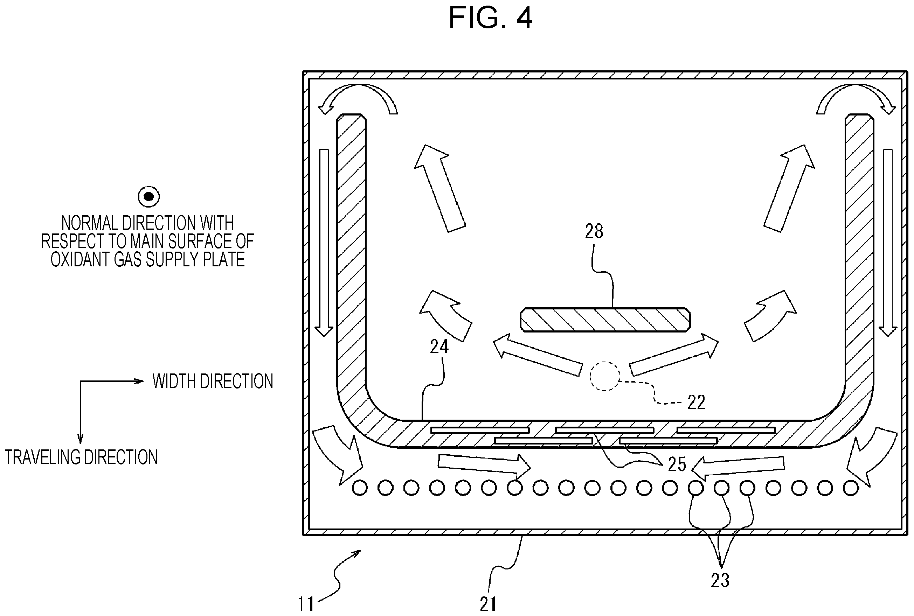

The oxidant gas supply plate 11 may be configured so that the oxidant gas can flow in from the supply plate inlet 22, flow in one direction inside, then turn back and flow out from the supply plate outlet 23. More specifically, an isolating portion 24 provided within the oxidant gas supply plate 11, as shown in FIG. 4, may allow the oxidant gas to flow in one direction and then turn back. The aforesaid one direction may be, for example, a direction opposite to the traveling direction, in other words, a direction from the supply plate outlet 23 to the supply plate inlet 22, when viewed from the normal direction of the main surface of the oxidant gas supply plate 11. Accordingly, the flow of oxidant gas entering from the supply plate inlet 22 becomes the counter flow of the off-gas flow in the first off-gas flow channel 14, which is to be described later, until turning back.

The isolating portion 24 may be substantially linearly symmetrical with respect to a straight line connecting the supply plate inlet 22 and the supply plate outlet 23, when viewed from the normal direction of the main surface of the oxidant gas supply plate 11. The isolating portion 24 may have portions extending from the supply plate outlet 23 side to the supply plate inlet 22 side on both sides of the line segment connecting the supply plate inlet 22 and the supply plate outlet 23, when viewed from the normal direction of the main surface of the oxidant gas supply plate 11. More specifically, the isolating portion 24 may be U-shaped, open on the supply plate inlet 22 side.

The isolating portion 24 may be formed by any method. As shown in FIG. 2, the isolating portion 24 may be formed, for example, by recessing a sheet which becomes at least one of the first plate portion 20 and the second plate portion 21, in a portion where the isolating portion 24 is to be formed, and joining the first plate portion 20 and the second plate portion 21 to each other. The isolating portion 24 may also be formed by joining a member having the above-described shape to the first plate portion 20 and the second plate portion 21.

As shown in FIG. 4, the oxidant gas supply plate 11 may have a heat-insulating portion 25 between the supply plate inlet 22 and the supply plate outlet 23, when viewed from the normal direction of the main surface of the oxidant gas supply plate 11. The heat-insulating portion 25 may be, for example, a hole through a portion of the isolating portion 24.

As described later, the oxidant gas supply plate 11 may have a projection protruding from at least one of the first plate portion 20 to the opposite wall (first heat-insulating material) 13 side and the second plate portion 21 to the fuel cell stack 12 side. As shown in FIGs. 2 and 3, for example, the oxidant gas supply plate 11 may have at least one first projection 26 protruding from the first main surface on the outer surface side of the first plate portion 20.

As shown in FIG. 3, the length of the first projection 26 in the traveling direction may be longer than its length in the width direction. The first projection 26 may extend in the traveling direction. The oxidant gas supply plate 11 may have three or more first projections 26 aligned along the width direction. The length in the traveling direction of the three or more first projections 26 may be longer as they go outward in the width direction. The first projection 26 may be positioned on the opposite side of the traveling direction than the center of the first main surface in the traveling direction.

The first projection 26 may be formed, for example, by press molding a sheet metal, which becomes the first plate portion 20, into an outwardly recessed shape. The first projection 26 may also be formed by joining a projection member to a sheet metal, which becomes the first plate portion 20.

The oxidant gas supply plate 11 may have a second projection 27 protruding from the first main surface. The second projection 27 may be at least higher from the first main surface than the first projection 26. As described below, the oxidant gas supply plate 11 is arranged so that the first main surface faces the opposite wall 13, and the second projection 27 may contact the opposite wall 13.

The length of the second projection 27 in the width direction may be longer than the length in the traveling direction. The length of the second projection 27 in the width direction may be shorter than the distance between the two portions of the isolating portion 24 extending in the direction opposite traveling direction, at both ends of the portion of the isolating portion 24 extending in the width direction. The second projection 27 may be positioned between the first projection 26 and the supply plate inlet 22 in the traveling direction. The second projection 27 may be positioned at the center in the width direction. The second projection 27 may extend in the width direction.

The second projection 27 may also be formed, for example, by press molding a sheet metal, which becomes the first plate portion 20, into an outwardly recessed shape. The second projection 27 may be formed by joining a projection member to a sheet metal, which becomes the first plate portion 20.

As shown in FIG. 2, the oxidant gas supply plate 11 may have a flow regulating portion 28 between the first plate portion 20 and the second plate portion 21. The flow regulating portion 28 may be positioned on the side of the oxidant gas supply plate 11 on the traveling direction side than the second projection 27, when viewed from the normal direction of the main surface of the oxidant gas supply plate 11. The flow regulating portion 28 may be positioned on the opposite side of the traveling direction than the supply plate inlet 22, when viewed from the normal direction of the main surface of the oxidant gas supply plate 11.

The flow regulating portion 28 may regulate the flow of the oxidant gas within the oxidant gas supply plate 11. More specifically, the flow regulating portion 28 may restrict the flow of the oxidant gas flowing from the supply plate inlet 22 in the opposite traveling direction. As shown in FIG. 4, the flow regulating portion 28 may restrict the flow of the oxidant gas in the opposite traveling direction by means of a wall surface extending in the width direction. The length of the flow regulating portion 28 in the width direction may be the same as the length of the second projection 27 in the width direction. A gap may be formed between the flow regulating portion 28 and the isolating portion 24, so that the oxidant gas flows through the gap.

The flow regulating portions 28 may be formed by any method. As shown in FIG. 2, the flow regulating portion 28 may be formed, for example, by recessing a sheet which becomes at least one of the first plate portion 20 and the second plate portion 21, in a portion where the flow regulating portion 28 is to be formed, and joining the first plate portion 20 and the second plate portion 21 to each other. The flow regulating portion 28 may also be formed by joining a member having the above-described shape to the first plate portion 20 and the second plate portion 21.

The oxidant gas supply plate 11 may have an extended portion 36 to be fixed within the housing 19. The extended portion 36 may be provided at the end of the oxidant gas supply plate 11 in the traveling direction. The extended portion 36 may have, when viewed from the width direction, a portion extending in the traveling direction and a portion that is bent from the aforesaid portion and extends toward the side of the second plate portion 21. The extended portion 36 may be formed from a sheet metal, which becomes at least one of the first plate portion 20 and the second plate portion 21.

As shown in FIG. 1, the oxidant gas supply plate 11 may be positioned in the housing 19 so that the traveling direction is the downward direction.

The oxidant gas may be supplied to the fuel cell stack 12 from the oxidant gas supply plate 11. The fuel gas may be supplied to the fuel cell stack 12 from the reformer 15. The fuel cell stack 12 may be erected on a manifold 37 that temporarily stores the fuel gas supplied from the reformer 15. The fuel cell stack 12 may include a plurality of stacked fuel cells. A hollow flat plate type fuel cell having a gas channel passing through the interior thereof in the vertical direction may be used as the fuel cell. The fuel cell generates electricity by an electrochemical reaction of the supplied oxidant gas and fuel gas. The fuel cell stack 12 discharges the gas produced by the electrochemical reaction, as well as unreacted fuel gas and oxidant gas. Hereafter, in the present description, the gas to be discharged is also referred to as off-gas.

The fuel cell stack 12 may be positioned adjacent to the oxidant gas supply plate 11 within the housing 19. The fuel cell stack 12 may be arranged so that the side surfaces of the fuel cells face the main surface of the oxidant gas supply plate 11. More specifically, the fuel cell stack 12 may face the main surface of the second plate portion 21. The fuel cell stack 12 may be arranged so that the stacking direction of the fuel cells is parallel to the width direction of the oxidant gas supply plate 11.

The fuel cell stack 12 may have an off-gas outlet flush with the distal end of the inner space IS of the oxidant gas supply plate 11 or on the upward direction side of the inner space IS of the oxidant gas supply plate 11 in the vertical direction. For example, the fuel cell stack 12 may have an off-gas outlet on its top surface within the fuel cell module 10. The top surface of the fuel cell stack 12 may be located at the same position as the distal end of the oxidant gas supply plate 11 in the vertical direction.

The opposite wall 13 may be a member having a flat surface. The opposite wall 13 may be a flat plate member. The opposite wall 13 may be a heat-insulating material (first heat-insulating material). In the configuration in which the opposite wall 13 is a heat-insulating material, it may be located adjacent to the first off-gas flow channel in the normal direction of the main surface of the oxidant gas supply plate 11.

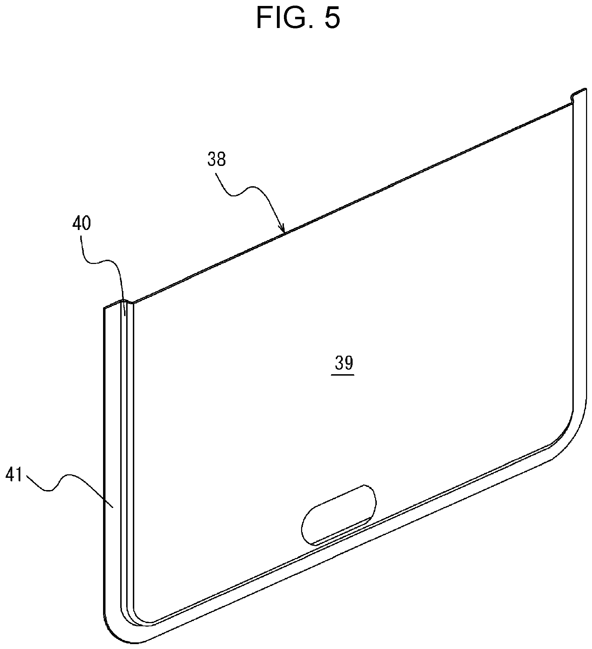

The opposite wall 13 may be formed of a metal. As shown in FIG. 5, the opposite wall 13 may be included in an off-gas channel plate 38, which is to be described later. The opposite wall 13 may be positioned within the housing 19 to face the first main surface of the oxidant gas supply plate 11 with a gap therebetween. The opposite wall 13 may be positioned so that the flat surface thereof is parallel to the first plate portion 20.

The off-gas channel plate 38 may have a flat plate portion 39, a side wall portion 40, and a flange portion 41. The flat plate portion 39 may function as the opposite wall 13. The flat plate portion 39 may be rectangular. The side wall portion 40 may be provided on all but a few of the outer edges of the flat plate portion 39. For example, the side wall portion 40 may be provided on all but one of the four sides of the rectangular flat plate portion 39. The side wall portion 40 may be vertical at the same height to the flat plate portion 39. The flange portion 41 may be provided on the side wall portion 40. The flange portion 41 may be brim-shaped.

The first off-gas flow channel 14 may be defined by the first main surface of the oxidant gas supply plate 11 and the opposite wall 13. Thus, in the normal direction of the main surface of the oxidant gas supply plate 11, the fuel cell stack 12, the oxidant gas supply plate 11, and the first off-gas flow channel 14 may be positioned in this order. Furthermore, in the aforesaid normal direction, the opposite wall 13, which is the first heat-insulating material, may be located further outward from the first off-gas flow channel 14. The first off-gas flow channel 14 may be part of the total flow channel of the off-gas that is discharged from the off-gas outlet of the fuel cell stack 12 and flows to the off-gas outlet of the housing 19.

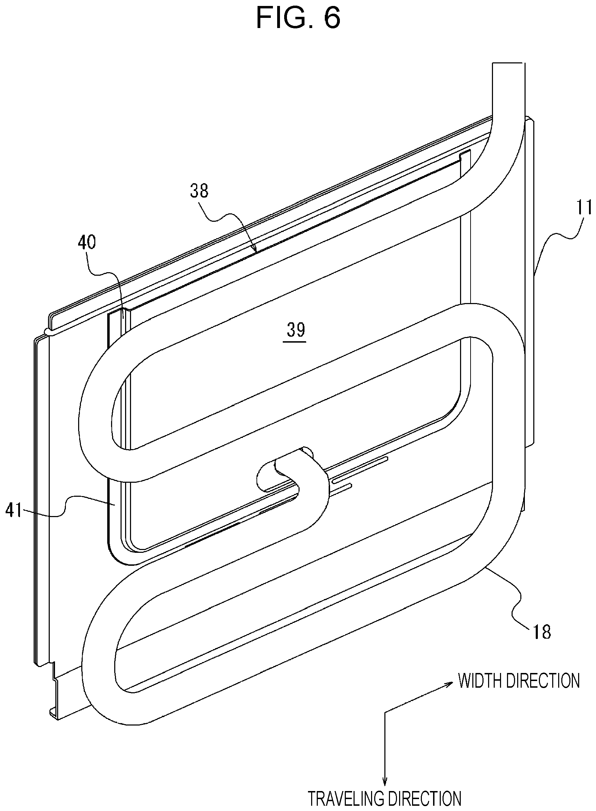

As described above, in the configuration in which the flat plate portion 39 of the off-gas channel plate 38 functions as the opposite wall 13, the flange portion 41 of the off-gas channel plate 38 may be joined to the first main surface of the oxidant gas supply plate 11, as illustrated in FIG. 6. With such a configuration, the flat plate portion 39 can be positioned to face the first main surface of the oxidant gas supply plate 11 with a gap therebetween. Thus, since the flat plate portion 39 can function as the opposite wall 13, it can define, together with the first main surface of the oxidant gas supply plate 11, the first off-gas flow channel 14.

The off-gas channel plate 38 may be positioned so that the outer edge, where the side wall portion 40 and the flange portion 41 are not provided, faces in the opposite direction of the traveling direction of the oxidant gas supply plate 11. In such an arrangement, the off-gas channel plate 38 may be joined to the first main surface in the end portion in the traveling direction. The space between the oxidant gas supply plate 11 and the off-gas channel plate 38 may be open on the opposite side of the traveling direction. Therefore, the end of the off-gas channel plate 38 on the side of the direction opposite to the traveling direction may function as an off-gas inflow port.

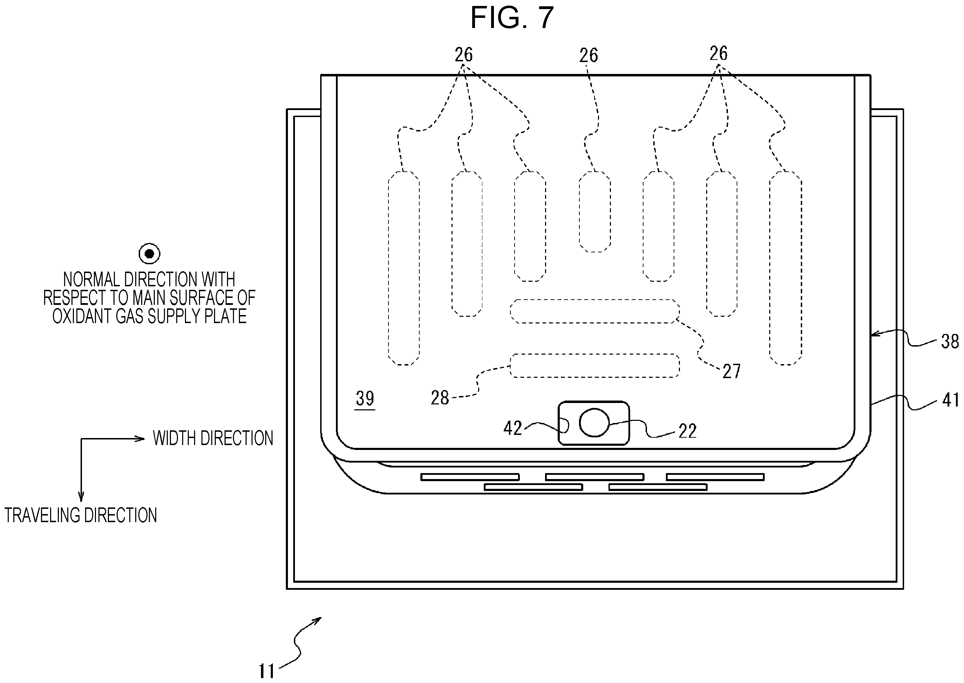

In the above-described arrangement with respect to the oxidant gas supply plate 11, as shown in FIG. 7, the flat plate portion 39 may extend outward, in the width direction, the area where the first projection 26 is located, when viewed from the normal direction of the first main surface. Since the flange portion 41 is provided on the outer edge of the flat plate portion 39 via the side wall portion 40, the off-gas channel plate 38 may be joined to the first main surface outside the area of the first projection 26 in the width direction. Furthermore, in such an arrangement, the flat plate portion 39 may extend, when viewed from the normal direction of the first main surface, in the traveling direction from the area where at least one of the first projection 26, the second projection 27, the flow regulating portion 28, and the supply plate inlet 22 is located. Thus, the off-gas channel plate 38 may be joined to the first main surface outside the area where at least one of the first projection 26, the second projection 27, the flow regulating portion 28, and the supply plate inlet 22 is located.

In the above-described arrangement with respect to the oxidant gas supply plate 11, when the traveling direction is vertically downward within the housing 19, the off-gas channel plate 38 may extend in the same direction as the distal end of the oxidant gas supply plate 11, or in a direction opposite to the traveling direction, in other words, the upward direction.

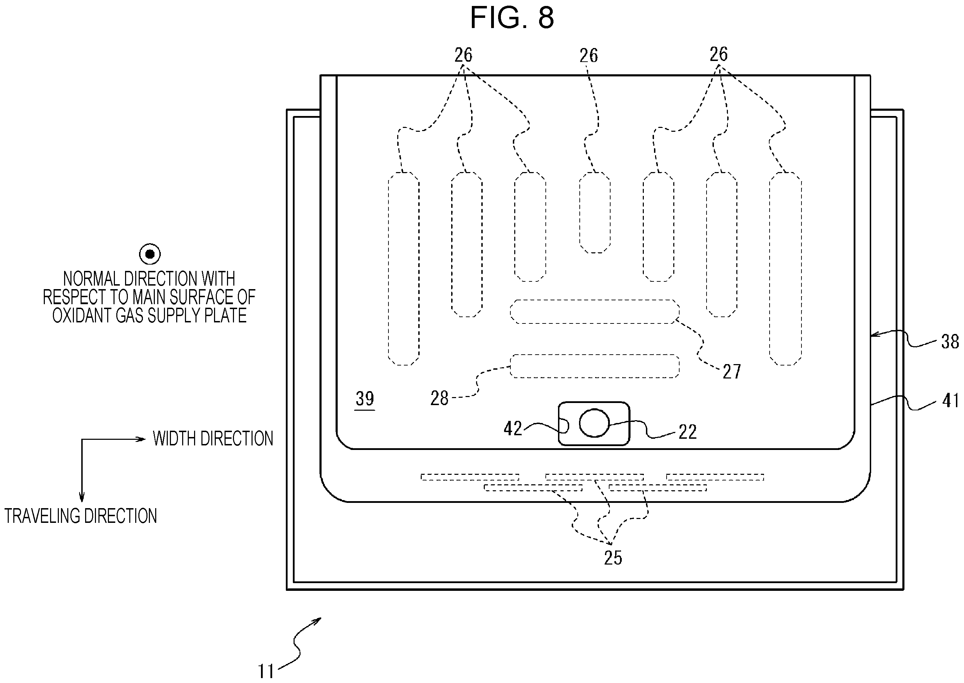

As shown in FIG. 8, in the above-described arrangement with respect to the oxidant gas supply plate 11, the flange portion 41 on the traveling direction side may extend to cover the hole-like heat-insulating portion 25 so as to function as a cover portion.

The flat plate portion 39 of the off-gas channel plate 38 may have, in an area facing the supply plate inlet 22, a discharge hole 42 into which the oxidant gas flow channel portion 18 is to be inserted. The discharge hole 42 may be circular or rectangular with rounded corners. The minimum diameter of the discharge hole 42 may be longer than the outer diameter of the oxidant gas flow channel portion 18. Since the minimum diameter of the discharge hole 42 is longer than the outer diameter of the oxidant gas flow channel portion 18, the off-gas flowing into the first off-gas flow channel 14 from the off-gas inflow port can be discharged through the discharge hole 42.

The reformer 15 may carry a catalyst inside. The reformer 15 may use the catalyst to generate a fuel gas to be supplied to the fuel cell stack 12 through a water vapor reforming reaction of raw fuel gas, such as city gas containing hydrocarbon gas. The reformer 15 may be located in the vicinity of the fuel cell stack 12 within the fuel cell module 10. More specifically, the reformer 15 may be located above the fuel cell stack 12 within the fuel cell module 10.

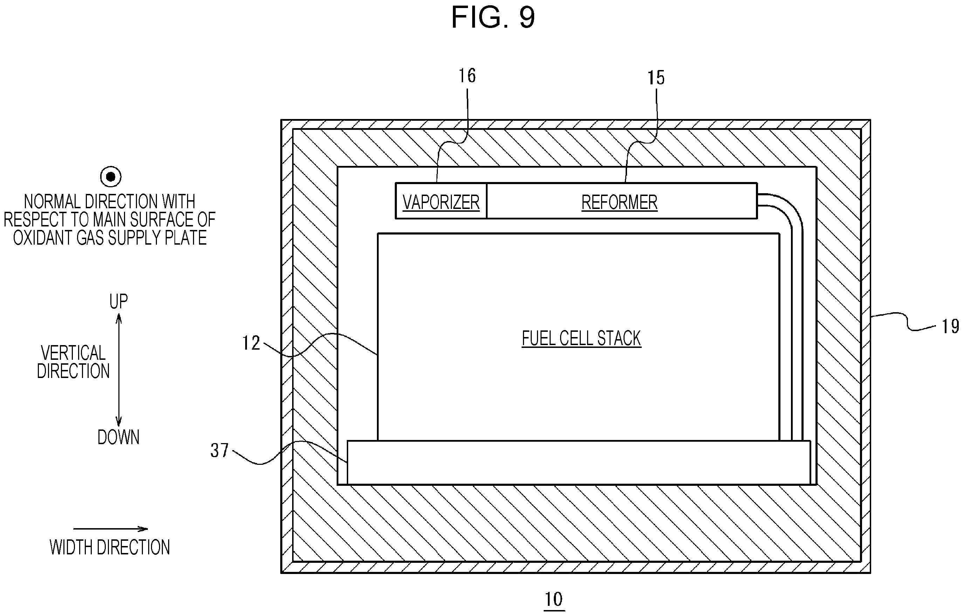

The vaporizer 16 may vaporize the supplied reforming water. The vaporizer 16 may supply the vaporized water vapor to the reformer 15. The vaporizer 16 may be located above the fuel cell stack 12 within the fuel cell module 10. As shown in FIG. 9, the vaporizer 16 may be located in a second direction from the reformer 15. The second direction is the direction that intersects the first direction. More specifically, the vaporizer 16 may be located at a different position from the reformer 15, more specifically at a position different from the reformer 15 in the width direction, when viewed from the normal direction of the main surface of the oxidant gas supply plate 11.

A reforming portion having the same function as the reformer 15 and a vaporizing portion having the same function as the vaporizer 16 may be integrated to form an integrated reformer 15. In such a configuration, the vaporizing portion may be located in the second direction from the reforming portion.

As shown in FIG. 1, the second heat-insulating material 17 may be located outside of the opposite wall body (first heat-insulating material) 13 in the normal direction of the main surface of the oxidant gas supply plate 11. Specifically, in the fuel cell module 10 shown in FIG. 1, the second heat-insulating material 17 may be located on the opposite side of the opposite wall 13 from the first off-gas flow channel 14. The second heat-insulating material 17 may have a plate-like shape. The second heat-insulating material 17 may be in surface contact with the opposite wall 13.

The second heat-insulating material 17 may surround the oxidant gas flow channel portion 18 together with the first heat-insulating material. In the first embodiment, the oxidant gas flow channel portion 18 may be buried in the second heat-insulating material 17. The second heat-insulating material 17 may have a first groove 29 formed to conform the shape of the oxidant gas flow channel portion 18. The second heat-insulating material 17 may have the oxidant gas flow channel portion 18 buried in the first groove 29. The thickness and depth of the first groove 29 may be larger than the diameter of the oxidant gas flow channel portion 18. In a state where the first heat-insulating material 13 is in close contact with the side surface of the second heat-insulating material 17 where the first groove 29 is provided, the first heat-insulating material 13, the first groove 29, and the outer peripheral surface of the oxidant gas flow channel portion 18 may define a second off-gas flow channel connected to the first off-gas flow channel 14. The second off-gas flow channel allows the off-gas flowing out of the first off-gas flow channel 14 to be discharged from the fuel cell module 10.

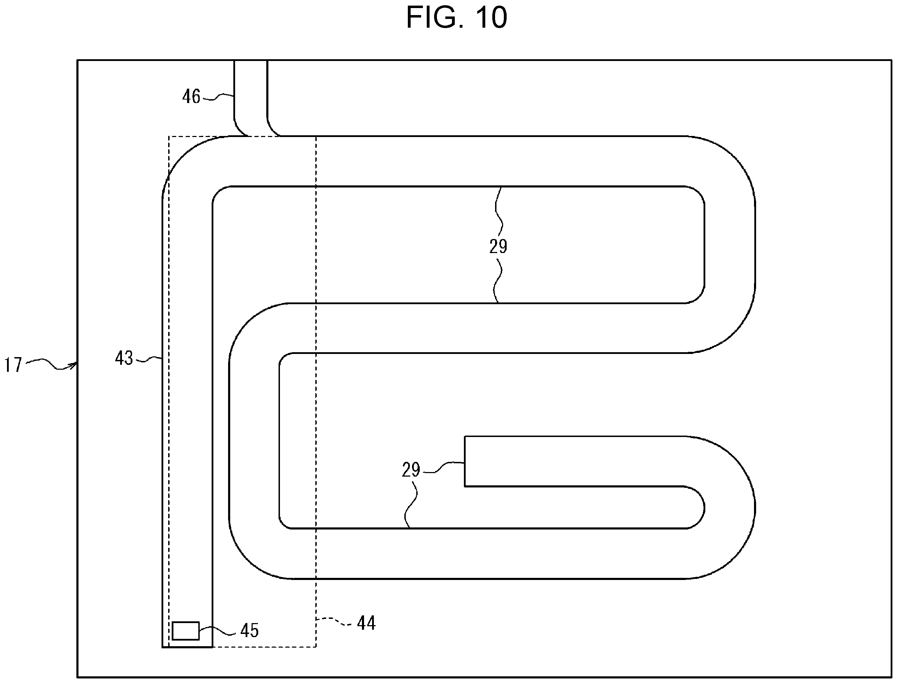

The second heat-insulating material 17 may have a second groove 43 formed to be continuous with the first groove 29, as shown in FIG. 10. The second groove 43 may be formed in an area outside of the area where the oxidant gas flow channel portion 18 is buried. In the state where the first heat-insulating material 13 is in close contact with the side surface of the second heat-insulating material 17 as described above, the first heat-insulating material 13 and the second groove 43 may define a third off-gas flow channel. The thickness and depth of the second groove 43 may be the same or different from the first groove 29.

The second off-gas flow channel may be connected, via a third off-gas flow channel for example, to an off-gas treatment chamber 44 provided in the fuel cell module 10. The off-gas treatment chamber 44 may be provided, for example, on the surface of the second heat-insulating material 17 opposite to the surface on which the first groove 29 is provided, and connected to the third off-gas flow channel via a communication hole 45. When viewed from the normal direction of the main surface of the second heat-insulating material 17, a portion of the off-gas treatment chamber 44 may overlap a portion of the first groove 29. Between the aforesaid portion of the first groove 29 and the off-gas treatment chamber 44, the heat-insulating material may be thinner than other portions. The off-gas treatment chamber 44 may be filled with a combustion catalyst that burns unreacted combustion gas in the off-gas.

A third groove 46 may be formed in the vicinity of the location where the first groove 29 and the second groove 43 are connected. The third groove 46 may be shaped to conform the shape of the portion of the oxidant gas flow channel portion 18 to be buried that is outside of the first groove 29. The thickness and depth of the third groove 46 may be the same as the diameter of the oxidant gas flow channel portion 18.

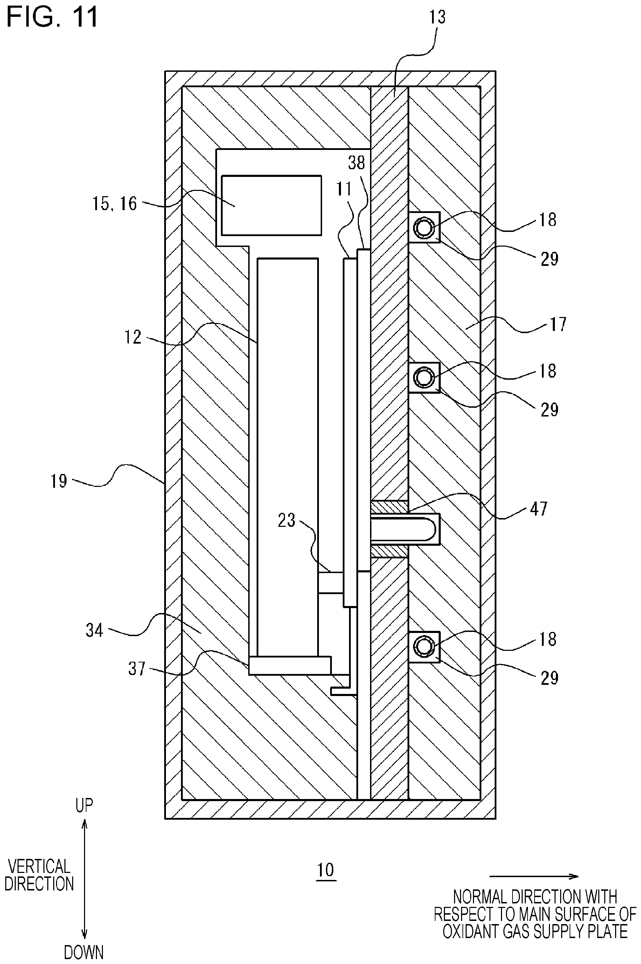

As shown in FIG. 11, in the configuration in which the off-gas channel plate 38 is provided, the discharge hole 42 may be communicated to the second off-gas flow channel by a guide portion 47, whose bottom has the same shape as the discharge hole 42 and which is provided at the discharge hole 42. The guide portion 47 may be cylindrical.

In the first embodiment, the oxidant gas flow channel portion 18 is tubular. The oxidant gas flow channel portion 18 may be located outside the first off-gas flow channel 14 in the normal direction of the main surface of the oxidant gas supply plate 11. In the first embodiment, the oxidant gas flow channel portion 18 may be located on the outside of the opposite wall 13, in other words, on the opposite side of the opposite wall 13 from the first off-gas flow channel 14. The oxidant gas flow channel portion 18 may be connected to the oxidant gas supply plate 11.

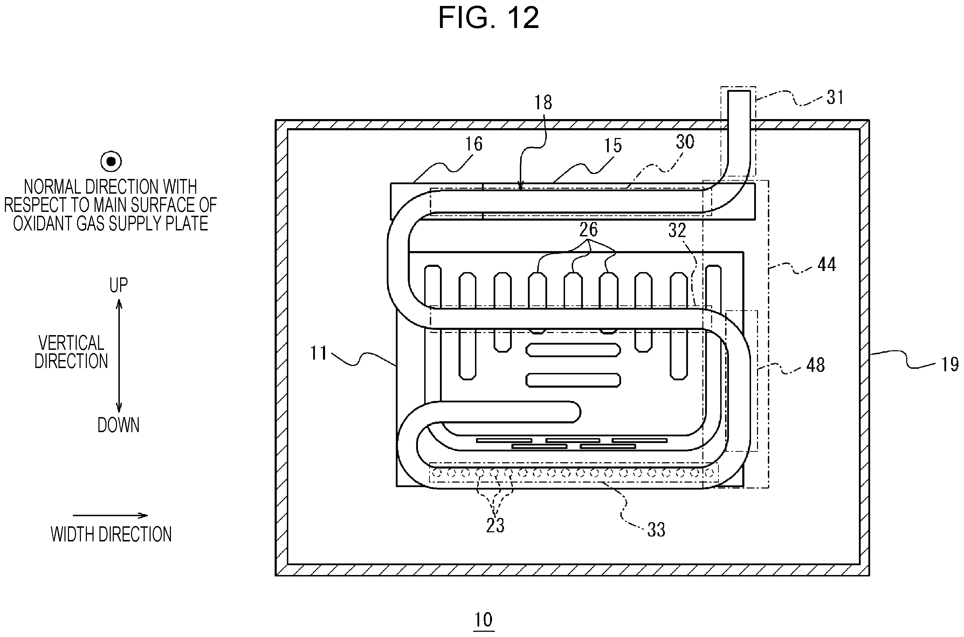

The oxidant gas flow channel portion 18 may have a meandering shape. As shown in FIG. 12, the oxidant gas flow channel portion 18 may have a meandering shape when viewed from the normal direction of the main surface of the oxidant gas supply plate 11. The oxidant gas flow channel portion 18 may have a first portion 48 that overlaps the off-gas treatment chamber 44 when viewed from the normal direction of the main surface of the oxidant gas supply plate 11. The oxidant gas flow channel portion 18 may have a second portion 30 that overlaps the reformer 15 and the vaporizer 16, when viewed from the normal direction of the main surface of the oxidant gas supply plate 11. The second portion 30 may extend in the width direction within the fuel cell module 10. An inlet 31 of the oxidant gas flow channel portion 18 may be located on the reformer 15 side than the vaporizer 16, when viewed from the normal direction of the main surface of the oxidant gas supply plate 11. The oxidant gas flow channel portion 18 may have a third portion 32 that overlaps the first projection 26, when viewed from the normal direction of the main surface of the oxidant gas supply plate 11. The third portion 32 may extend in the width direction within the fuel cell module 10. The oxidant gas flow channel portion 18 may have a fourth portion 33 that overlaps the supply plate outlet 23 when viewed from the normal direction of the main surface of the oxidant gas supply plate 11. The fourth portion 33 may be a portion of the piping extending in the width direction within the fuel cell module 10. The oxidant gas flow channel portion 18 may have a fifth portion extending on the lower side within the fuel cell module 10. The fifth portion may be the same as or different from the fourth portion.

As shown in FIG. 1, the housing 19 may house the oxidant gas supply plate 11, the fuel cell stack 12, the opposite wall (first heat-insulating material) 13, the reformer 15, the vaporizer 16, the second heat-insulating material 17, and the oxidant gas flow channel portion 18. The housing 19 may be of any shape. The housing 19 has, for example, a rectangular parallelopiped shape. The housing 19 may be formed of any material.

Within the housing 19, the oxidant gas supply plate 11 may be separated away from the inner wall of the housing 19 on the upward direction (first direction) side. By being separated away from the inner wall, the space on the fuel cell stack 12 side of the oxidant gas supply plate 11 may communicate with the space on the opposite side, in other words, the space that serves as the first off-gas flow channel 14. For example, with such a configuration, the off-gas discharged from the fuel cell stack 12 may flow into the first main surface side of the oxidant gas supply plate 11 from the direction opposite to the traveling direction of the oxidant gas supply plate 11.

Within the housing 19, in the oxidant gas supply plate 11, the second plate portion 21, which is a surface facing the fuel cell stack 12, and the first plate portion 20, which is a surface on the opposite side of the fuel cell stack 12, may be connected directly or indirectly to the housing 19. In the first embodiment, the first plate portion 20 of the oxidant gas supply plate 11 is connected to the tubular oxidant gas flow channel portion 18, and the inlet 31 of the oxidant gas flow channel portion 18 is connected to the housing 19. In the first embodiment, with such a configuration, the oxidant gas supply plate 11 is indirectly connected to the housing 19.

Within the housing 19, a third heat-insulating material 34 may be provided around the inner space where the oxidant gas supply plate 11, the fuel cell stack 12, the reformer 15, and the vaporizer 16 are provided, except on the side of the opposite wall 13.

As shown in FIG. 1, the oxidant gas supply plate 11 may be fixed in the housing 19 by piercing the extended portion 36 of the oxidant gas supply plate 11 into the third heat-insulating material 34.

In the fuel cell module 10 of the first embodiment having the above-described configuration, the oxidant gas supply plate 11 is positioned to be separated away from the inner wall of the housing 19 on the upward direction side so that the space of the oxidant gas supply plate 11 on the fuel cell stack 12 side communicates with the space on the opposite side. With such a configuration, in the fuel cell module 10, the high-temperature off-gas discharged from the fuel cell stack 12 flows to the first plate portion 20 side of the oxidant gas supply plate 11. Hence, in the fuel cell module 10, the oxidant gas supply plate 11 is heated not only by the opposing fuel cell stack 12, but also by the off-gas, so that the oxidant gas flowing inside the oxidant gas supply plate 11 can also be heated. In the fuel cell module 100, in addition to the oxidant gas supply plate 11 being separated away from the inner wall on the upward direction side, the second plate portion 21, which is a surface facing the fuel cell stack 12, and the first plate portion 20, which is a surface on the opposite side of the fuel cell stack 12, are connected directly or indirectly to the housing 19. With such a configuration, it is easy for the fuel cell module 10 to release thermal stress, especially in the vertical direction of the oxidant gas supply plate 11, so that deformation of the oxidant gas supply plate 11 con be suppressed.

In the fuel cell module 10 of the first embodiment, the off-gas outlet of the fuel cell stack 12 is located flush with the distal end of the inner space IS of the oxidant gas supply plate 11 or on the upward direction side of the inner space IS of the oxidant gas supply plate 11 in the upward direction. With such a configuration, in the fuel cell module 10, the entire main surface of the oxidant gas supply plate 11 faces the fuel cell stack 12, so that the entire main surface of the oxidant gas supply plate 11 can utilize the radiant heat from the fuel cell stack 12.

In the fuel cell module 10 of the first embodiment, the oxidant gas supply plate 11 has the first plate portion 20 and the second plate portion 21 located opposite each other, the first plate portion 20 has the supply plate inlet 22, the second plate portion 21 has the supply plate outlet 23, and the supply plate inlet 22 is provided in the vicinity of the center of the fuel cell stack 12 in the stacking direction. With such a configuration, the fuel cell module 10 can reduce the difference in temperature distribution in the stacking direction of the fuel cell stack 12.

In the fuel cell module 10 of the first embodiment, the oxidant gas flows into the oxidant gas supply plate 11 from the supply plate inlet 22, flows in one direction inside the oxidant gas supply plate 11, then turns back and flows out from the supply plate outlet 23. With such a configuration, in the fuel cell module 10, since the flow channel through which the oxidant gas passes inside the oxidant gas supply plate 11 is longer, the oxidant gas can be further heated.

In the fuel cell module 10 of the first embodiment, the supply plate inlet 22 and the supply plate outlet 23 are located at different positions when viewed from the normal direction of the main surface of the oxidant gas supply plate 11, and the oxidant gas supply plate 11 has the heat-insulating portion 25 between the supply plate inlet 22 and the supply plate outlet 23 when viewed from the aforesaid normal direction. Since the oxidant gas flowing out of the supply plate outlet 23 is heated in the oxidant gas supply plate 11, it is hotter than the oxidant gas flowing in from the supply plate inlet 22. With respect to such event, with the above-described configuration, the fuel cell module 10 can suppress the cooling of the oxidant gas before flowing out of the supply plate outlet 23 by the oxidant gas flowing in from the supply plate inlet 22.

The fuel cell module 10 of the first embodiment is further provided with a cover portion covering the hole-like heat-insulating portion 25. With such a configuration, the fuel cell module 10 avoids the oxidant gas flowing out of the supply plate outlet 23 from entering the first off-gas flow channel 14 through the hole-like heat-insulating portion 25.

In the fuel cell module 10 of the first embodiment, when viewed from the normal direction of the main surface of the oxidant gas supply plate 11, the oxidant gas supply plate 11 has the isolating portion 24 located at least between the supply plate inlet 22 and the supply plate outlet 23 and partially partitioning the inner space into an inner space on the supply plate inlet 22 side and an inner space on the supply plate outlet 23 side, the isolating portion 24 being line symmetrical with respect to a straight line connecting the supply plate inlet 22 and the supply plate outlet 23. With such a configuration, in the fuel cell module 10, since the oxidant gas flows uniformly within the oxidant gas supply plate 11, the oxidant gas can be heated efficiently.

The fuel cell module 10 of the first embodiment has portions extending from the supply plate outlet 23 to the supply plate inlet 22 side on both sides of the line segment connecting the supply plate inlet 22 and the supply plate outlet 23, when viewed from the normal direction of the main surface of the oxidant gas supply plate 11. With such a configuration, the oxidant gas flowing in from the supply plate inlet 22 turns back while spreading over the entire oxidant gas supply plate 11, so that the oxidant gas can be heated efficiently.

The fuel cell module 10 of the first embodiment is further provided with the off-gas channel plate 38 that defines the flow channel of the off-gas together with the oxidant gas supply plate 11. With such a configuration, the fuel cell module 10 can perform efficient heat exchange between the oxidant gas and the off-gas in the oxidant gas supply plate 11 without dispersing the off-gas discharged from the fuel cell stack 12 to the surroundings. Thus, the fuel cell module 10 can further heat the oxidant gas.

In the fuel cell module 10 of the first embodiment, the off-gas inflow port of the off-gas channel plate 38 is located flush with the oxidant gas supply plate 11 or on the opposite side of the oxidant gas supply plate 11 in the traveling direction. With such a configuration, the fuel cell module 10 can efficiently guide the off-gas discharged from the fuel cell stack 12 to the first off-gas flow channel 14.

In the fuel cell module 10 of the first embodiment, the off-gas channel plate 38 is joined to the first main surface outside the area of the first projection 26 in the width direction. With such a configuration, since the area where the first projection 26 is located is concentrated in the interior of the first off-gas flow channel 14, the fuel cell module 10 can perform efficient heat exchange between the oxidant gas and the off-gas in the oxidant gas supply plate 11. Thus, the fuel cell module 10 can further heat the oxidant gas.

In the fuel cell module 10 of the first embodiment, the off-gas channel plate 38 is joined to the first main surface outside the area of the first projection 26 on the traveling direction side of the flow channel of the off-gas. With such a configuration, since the area used for heat exchange between the oxidant gas and the off-gas in the oxidant gas supply plate 11 is large, the fuel cell module 10 can perform efficient heat exchange between the oxidant gas and the off-gas. Thus, the fuel cell module 10 can further heat the oxidant gas.

In the fuel cell module 10 of the first embodiment, the discharge port 42 and the second off-gas flow channel are communicated with each other by the guide portion 47. With such a configuration, the fuel cell module 10 can guide the off-gas discharged from the first off-gas flow channel 14, which is defined by the off-gas channel plate 38, to flow into the second off-gas flow channel.

The fuel cell module 10 of the first embodiment is further provided with the off-gas treatment chamber 44, and the second off-gas flow channel and the off-gas treatment chamber 44 are connected via the third off-gas flow channel. With such a configuration, the fuel cell module 10 can have an increased degree of freedom in design. For example, the fuel cell module 10 can be designed so that the distance between the connection location of the second off-gas flow channel and the third off-gas flow channel and the location where the inlet of the oxidant gas flow channel portion 18 is buried is reduced. Thus, in such an example, in the fuel cell module 10, the oxidant gas supplied from the oxidant gas flow channel portion 18 is immediately heat exchanged by the off-gas flowing in the second off-gas flow channel, so that the oxidant gas flowing in the oxidant gas flow channel portion 18 and the off-gas can efficiently transfer heat.

In the fuel cell module 10 of the first embodiment, the second off-gas flow channel and the third off-gas flow channel have the same thickness and depth. With such a configuration, since the wall from the second off-gas flow channel to the third off-gas flow channel is continuous, the fuel cell module 10 can flow the off-gas uniformly. Further, with such a configuration, the fuel cell module 10 can be manufactured in a concise manner and with a reduced manufacturing cost.

In the fuel cell module 10 of the first embodiment, the oxidant gas flow channel portion 18 has a first portion 48 that overlaps the off-gas treatment chamber 44 when viewed from the normal direction of the main surface of the oxidant gas supply plate 11. With such a configuration, the fuel cell module 10 can efficiently transfer heat generated by combustion of unreacted combustion gas in the off-gas treatment chamber 44 to the oxidant gas flowing in the oxidant gas flow channel portion 18.

In the fuel cell module 10 of the first embodiment, the oxidant gas flow channel portion 18 has the fifth portion extending in the lower side in the fuel cell module 10. With such a configuration, since the center of gravity of the oxidant gas flow channel portion 18 is located on the lower side in the vertical direction, the fuel cell module 10 can be stabilized.

In a second embodiment of the present disclosure, a fuel cell module will be described below. The second embodiment differs from the first embodiment in the configuration of the oxidant gas supply plate, the first off-gas flow channel, the second heat-insulating material, the oxidant gas flow channel portion and the like. The following is a description of the second embodiment focusing on matters different from the first embodiment Note that components having the same functions and structures as those of the first embodiment will be denoted by the same reference signs.

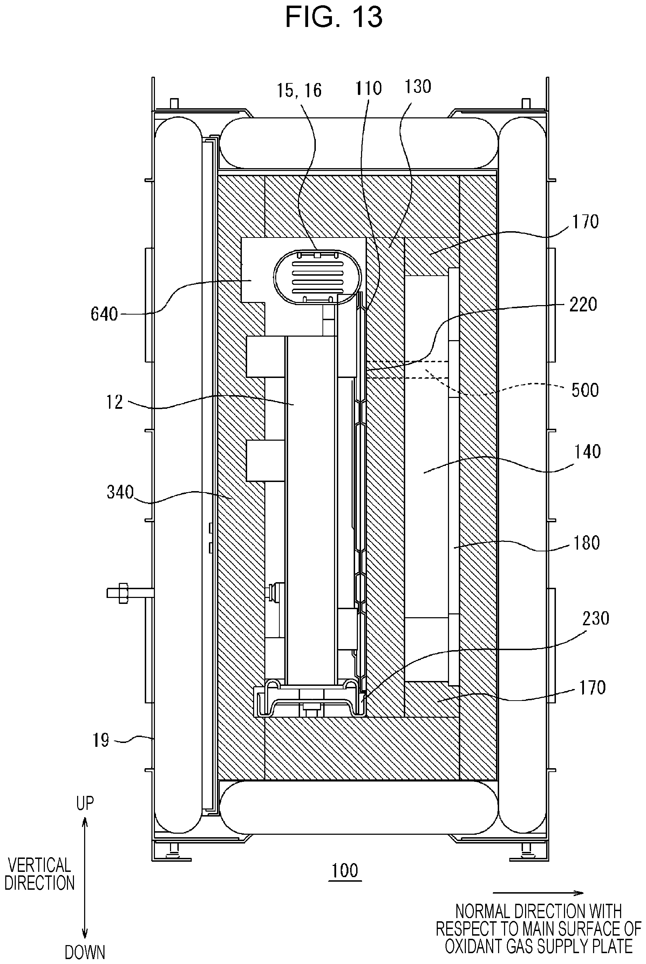

As shown in FIG. 13, similar to the first embodiment, a fuel cell module 100 of the second embodiment may include an oxidant gas supply plate 110, a fuel cell stack 12, a first heat-insulating material 130, a first off-gas flow channel 140, a reformer 15, a vaporizer 16, a second heat-insulating material 170, an oxidant gas flow channel portion 180, and a housing 19. Unlike the first embodiment, the fuel cell module 100 may further include an exhaust gas lead-out portion, which is to be described later. The structures and the functions of the fuel cell stack 12, the reformer 15, the vaporizer 16, and the housing 19 are the same as in the first embodiment.

Similar to the first embodiment, in the fuel cell module 100, the oxidant gas can be supplied to the fuel cell stack 12 from outside the fuel cell module 100 via the oxidant gas flow channel portion 180 and the oxidant gas supply plate 110. The fuel cell module 100 can also discharge, via the first off-gas flow channel 140, the gas discharged by the fuel cell stack 12 from the fuel cell module 100.

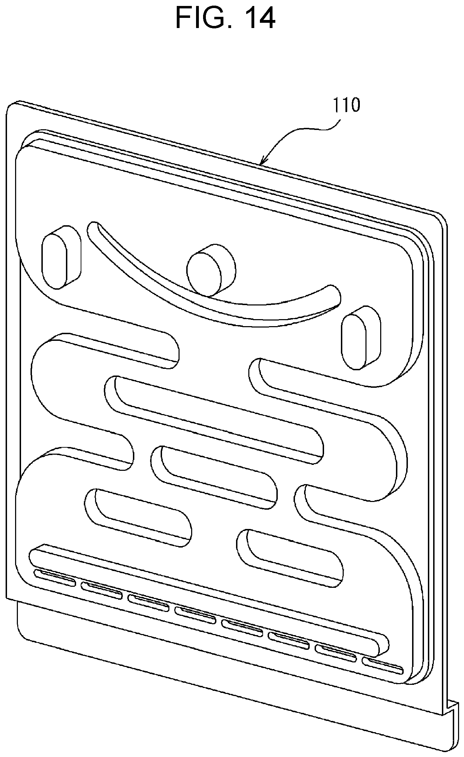

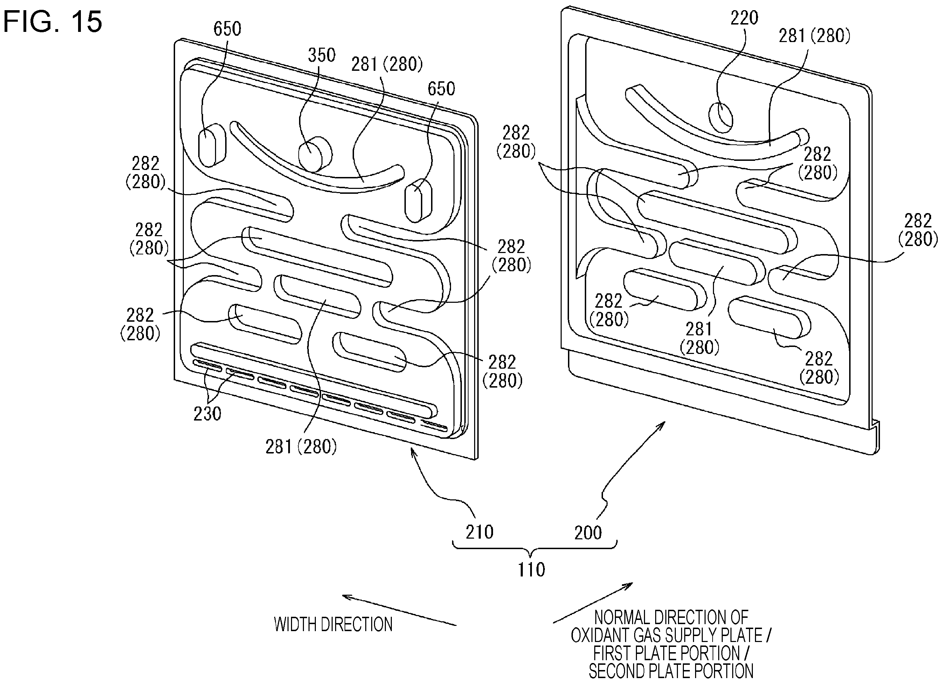

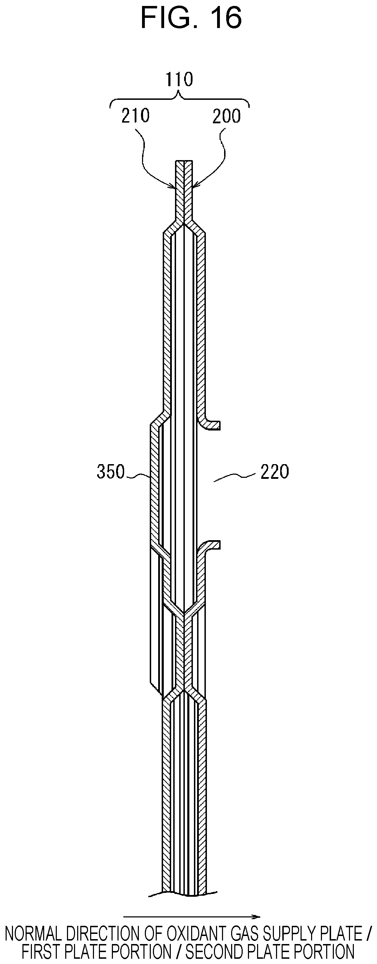

As shown in FIG. 14, similar to the first embodiment, the oxidant gas supply plate 110, as a whole, may have a rectangular plate-like shape. Similar to the first embodiment, the oxidant gas supply plate 110 may have an inner space IS that allows flow of the oxidant to be supplied to the fuel cell stack 12. More specifically, as shown in FIGs. 15 and 16, similar to the first embodiment, the oxidant gas supply plate 110 may have a first plate portion 200 and a second plate portion 210 facing each other. Similar to the first embodiment, the oxidant gas supply plate 110 may be formed by joining the outer periphery of the first plate portion 200 and the second plate portion 210 with a gap therebetween.

Similar to the first embodiment, the oxidant gas supply plate 110 may be formed of a heat-resistant material such as a metal.

As shown in FIG. 15, the first plate portion 200 may have a supply plate inlet 220. The supply plate inlet 220 may be positioned in the vicinity of the center of the fuel cell stack 12 in the stacking direction of the cells within the fuel cell module 100. The supply plate inlet 220 may be provided in a portion opposite the upward direction side (first direction side) end portion of the fuel cell stack 12, within the fuel cell module 100. Note that the upward direction side end portion includes the position up to 1/3 of the length in the upward direction from the upper end of the fuel cell stack 12.

The second plate portion 210 may have, at a location opposite the supply plate inlet 220, a third projection 350 that is recessed to the side opposite to the first plate portion 200. As shown in FIG. 16, at least a part of the inner wall surface around an axis parallel to the normal direction of the main surface of the second plate portion 210 in the third projection 350 may be inclined in the aforesaid normal direction to face toward the first plate portion 200. As shown in FIG. 15, the second plate portion 210 may have a supply plate outlet 230, similar to the first embodiment.

The oxidant gas supply plate 110 may have at least one flow regulating portion 280 between the supply plate inlet 220 and the supply plate outlet 23, when viewed from the normal direction of the main surface of the oxidant gas supply plate 11. The flow regulating portion 280 may be provided on at least one of the first plate portion 200 and the second plate portion 210. In one example, the flow regulating portion 280 is provided on both the first plate portion 200 and the second plate portion 210 in the same shape and opposite each other. The flow regulating portion 280 may rise from at least one of the first plate portion 200 and the second plate portion 210 to the other.

The flow regulating portion 280 may include at least one first flow regulating portion 281 and at least one second flow regulating portion 282. The rising of the first flow regulating portion 281 from at least one of the first plate portion 200 and the second plate portion 210 to the other may be in contact with the aforesaid other. The second flow regulating portion 282 may have a gap in the facing direction between the first plate portion 200 and the second plate portion 210 while rising from at least one of the first plate portion 200 and the second plate portion 210 to the other. Since the second flow regulating portion 282 is part of the first plate portion 200 and the second plate portion 210, in a configuration in which the second flow regulating portion 282 is provided on both the first plate portion 200 and the second plate portion 210, there is a gap between the second flow regulating portions 282 facing each other. In the following description, when describing matters common to the first flow regulating portion 281 and the second flow regulating portion 282, they are simply referred to as the flow regulating portion 280.

The flow regulating portion 280 may be shaped to extend at least in a direction that intersects the direction from the supply plate inlet 220 to the supply plate outlet 23. At least some of a plurality of flow regulating portions 280 may be curved in the direction from the supply plate outlet 230 to the supply plate inlet 220, when viewed from the normal direction of the main surface of the oxidant gas supply plate 110. For example, the first flow regulating portion 281 proximate to the supply plate inlet 220 may be curved in the direction from the supply plate outlet 230 to the supply plate inlet 220, when viewed from the normal direction of the main surface of the oxidant gas supply plate 110. The plurality of flow regulating portions 280 may be located so as to be aligned in the direction from the supply plate inlet 220 to the supply plate outlet 230. The flow regulating portions 280 adjacent to each other in the aforesaid direction may have portions that do not overlap each other in the width direction.

The flow regulating portion 280 may regulate the flow of oxidant gas from the supply plate inlet 220 to the supply plate outlet 230 within the oxidant gas supply plate 110. The first flow regulating portion 281 may regulate the flow of the oxidant gas so that the oxidant gas avoids the first flow regulating portion 281 in the flow of the oxidant gas from the supply plate inlet 220 to the supply plate outlet 230. The second flow regulating portion 282 may regulate the flow of the oxidant gas flowing from the supply plate inlet 220 to the supply plate outlet 230 so that the oxidant gas becomes a flow that flows through the gap between the second flow regulating portion 282 and a flow that avoids the second flow regulating portion 282. With such a configuration, the flow regulating portion 280 may disperse the oxidant gas in multiple directions parallel to the main surface of the second plate portion 210.

The second plate portion 210 may have a plurality of support portions 650. The plurality of support portions 650 may be located side by side in the width direction. The support portion 650 may support heat-insulating material sandwiched between the fuel cell stack 12 and the oxidant gas supply plate 110 in the fuel cell module 100. The support portion 650 may be a projection protruding from the second plate portion 210 toward the fuel cell stack 12.

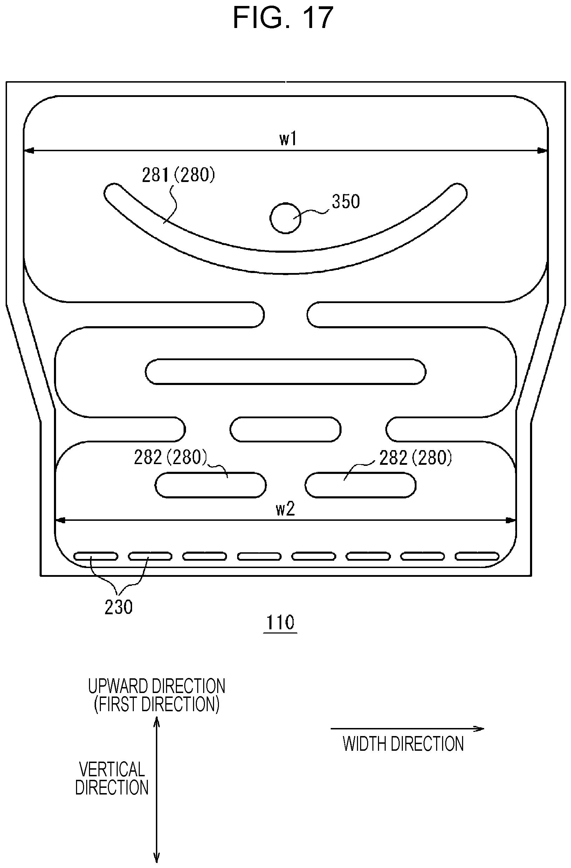

As shown in FIG. 17, within the fuel cell module 100, in the upward direction (first direction) and in the width direction perpendicular to the normal direction of the main surface of the oxidant gas supply plate 110, a width w1 of the inner space IS of the oxidant gas supply plate 110 on the upward direction side may be larger than a width w2 of the inner space IS of the oxidant gas supply plate 110 on the downward direction side. Furthermore, the width w2 on the upward direction side of the inner space IS may be longer than the width of the opposing fuel cell stack 12. The width w2 on the downward direction side of the inner space IS may also be the same as the width of the opposing fuel cell stack 12.

As shown in FIG. 13, the oxidant gas supply plate 110 may be positioned within the housing 19 so that the direction from the supply plate inlet 220 to the supply plate outlet 230 is the downward direction.

Similar to the first embodiment, the fuel cell stack 12 may be supplied with oxidant gas from the oxidant gas supply plate 110.

Similar to the first embodiment, the fuel cell stack 12 may be positioned adjacent to the oxidant gas supply plate 110 within the housing 19. Similar to the first embodiment, the fuel cell stack 12 may be arranged so that the side surfaces of the fuel cells face the main surface of the oxidant gas supply plate 110. More specifically, similar to the first embodiment, the fuel cell stack 12 may face the main surface of the second plate portion 210. Similar to the first embodiment, the fuel cell stack 12 may be arranged so that the stacking direction of the fuel cells is parallel to the width direction of the oxidant gas supply plate 110.

Unlike the first embodiment, the fuel cell stack 12 may have an off-gas outlet on the downward direction side (the side opposite the first direction) from the distal end of the inner space IS of the oxidant gas supply plate 11 in the vertical direction. For example, the top of the fuel cell stack 12 may be located on the downward direction side from the distal end of the oxidant gas supply plate 11 in the vertical direction.

Unlike the first embodiment, the first heat-insulating material 130 may be located between the oxidant gas supply plate 110 and the first off-gas flow channel 140 in the normal direction of the main surface of the oxidant gas supply plate 110. The first heat-insulating material 130 may have a rectangular plate-like shape. The first heat-insulating material 130 may be sized to cover the fuel cell stack 12, the oxidant gas supply plate 110, the reformer 15, and the vaporizer 16 within the fuel cell module 100.

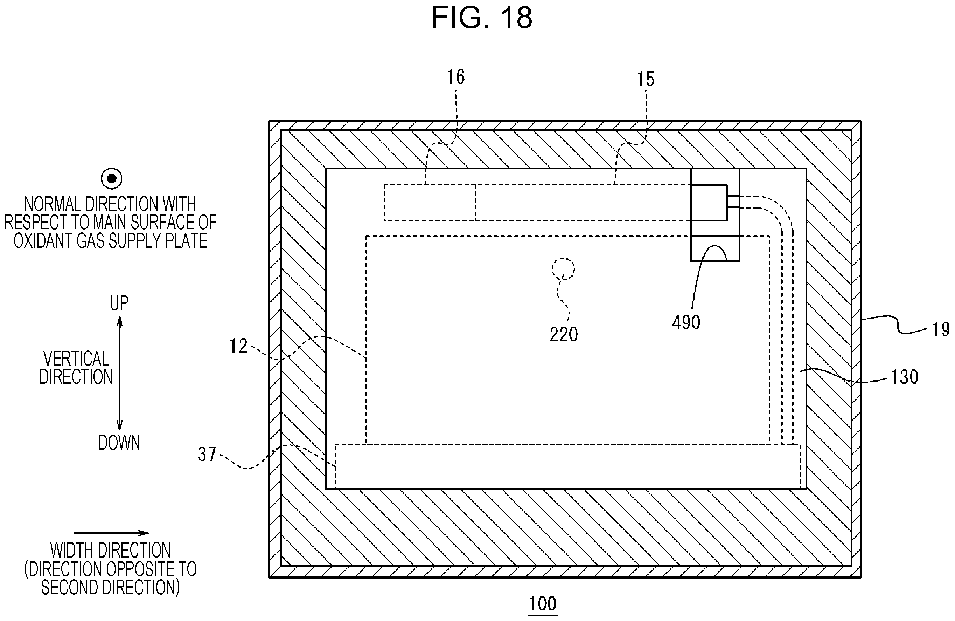

The first heat-insulating material 130, together with other heat-insulating materials, may define an inner space that houses the oxidant gas supply plate 110, the fuel cell stack 12, the reformer 15, and the vaporizer 16. An exhaust gas lead-out portion 490 may be provided in the aforesaid inner space. The first heat-insulating material 130 may be disposed in contact with a first off-gas flow channel portion 510, which will be described later, and the oxidant gas supply plate 110. As shown in FIG. 18, the exhaust gas lead-out portion 490 may be, for example, a cutout portion formed by cutting out a part of the first heat-insulating material 130. The exhaust gas lead-out portion 490 is a path for leading the off-gas out to the first off-gas flow channel 140. The exhaust gas lead-out portion 490 is, in other words, an off-gas discharge port of the fuel cell stack 12.

In the flow of the off-gas discharged from the fuel cell stack 12 to the reformer 15 side, the exhaust gas lead-out portion 490 may allow the off-gas to flow in a direction opposite to the second direction, in other words, in a direction from the vaporizer 16 side to the reformer 15 side. For example, such a function can be achieved by forming the exhaust gas lead-out portion 490 in the direction opposite to the second direction on the upward direction side of the inner space above.

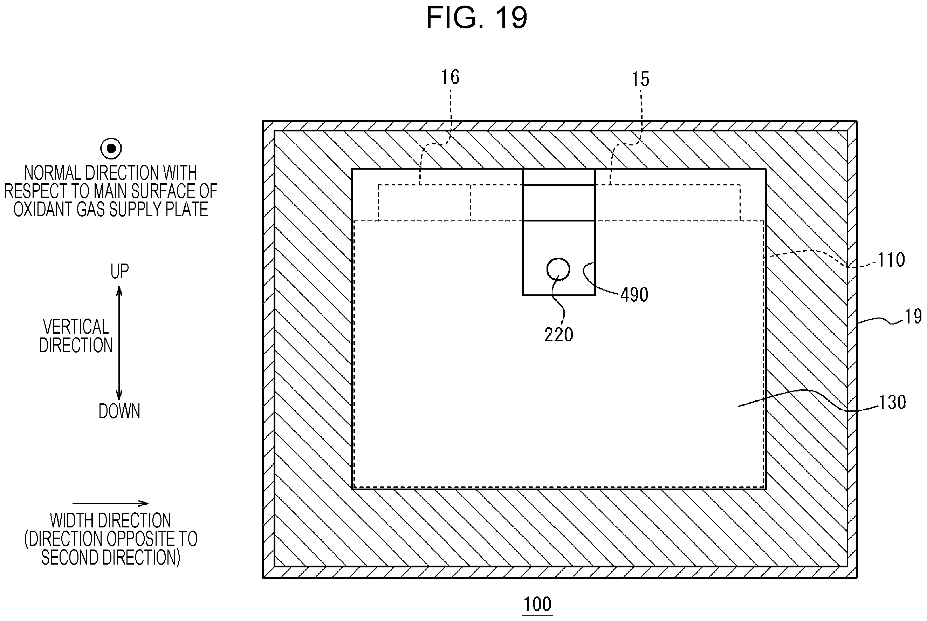

In the flow of the off-gas discharged from the fuel cell stack 12 toward the reformer 15 side, the exhaust gas lead-out portion 490 may cause the off-gas to flow toward the center of the housing 19 in the second direction. For example, such a function can be achieved by forming the exhaust gas lead-out portion 490 in the vicinity of the center, in the second direction, of the inner space on the upward direction side, as shown in FIG. 19.

As described above, the configuration in which the exhaust gas lead-out portion 490, which is a cutout, is provided on the opposite side of the second direction or in the vicinity of the center in the second direction is described as an example, but the exhaust gas lead-out portion 490 is not limited to be provided in the vicinity of the end portion in the direction opposite to the second direction or in the vicinity of the center in the second direction, but may be provided in the vicinity of the end portion on the second direction side or provided over the entire second direction.

Furthermore, the exhaust gas lead-out portion 490 may be formed by cutting out a part of an area in the fuel cell module 100 that contains the supply plate inlet 220, when viewed from the normal direction of the main surface of the oxidant gas supply plate 110. In other words, the cutout area may be cut in a size so that there is a gap between the cutout and the outer peripheral surface of a communication pipe 500 that communicates the supply plate inlet 220 and the oxidant gas flow channel portion 180. The off-gas discharged from the fuel cell stack 12 can be avoided from flowing below the cutout by the first heat-insulating material 130.

As shown in FIG. 13, the communication pipe 500 that communicates the supply plate inlet 220 and the oxidant gas flow channel portion 180 may be inserted in the first heat-insulating material 130 within the fuel cell module 100.

As shown in FIG. 18, in the configuration in which the exhaust gas lead-out portion 490 and the supply plate inlet 220 do not overlap when viewed from the normal direction of the main surface of the oxidant gas supply plate 110, the off-gas discharged from the fuel cell stack 12 may flow into the first off-gas flow channel 140 via the flow channel defined by the exhaust gas lead-out portion 490. As shown in FIG. 19, in the configuration in which the exhaust gas lead-out portion 490 and the supply plate inlet 220 overlap when viewed from the aforesaid normal direction, the off-gas discharged from the fuel cell stack 12 flows into the first off-gas flow channel 140 via the flow channel defined by the exhaust gas lead-out portion 490 and the outer peripheral surface of the communication pipe 500.

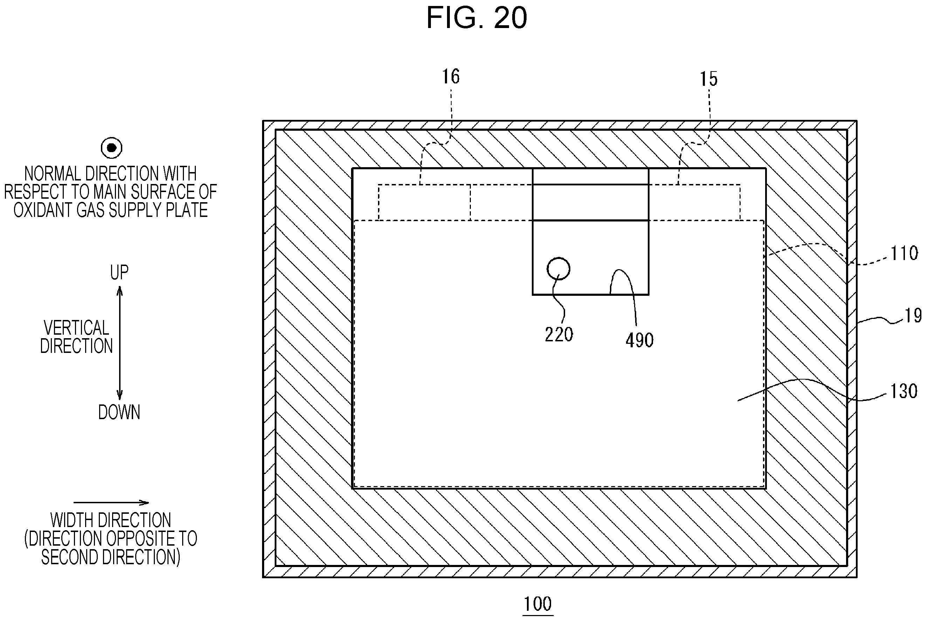

As shown in FIG. 20, in the configuration in which the exhaust gas lead-out portion 490 and the supply plate inlet 220 overlap when viewed from the normal direction, the supply plate inlet 220, or in other words, the communication pipe 500 may be deviated from the center of the exhaust gas lead-out portion 490 in a direction perpendicular to the upward direction (first direction) and the normal direction of the main surface of the oxidant gas supply plate 110. In the configuration in which the communication pipe 500 is deviated from the center of the exhaust gas lead-out portion 490, the exhaust gas lead-out portion 490 may extend from the center to the second direction or the opposite direction.

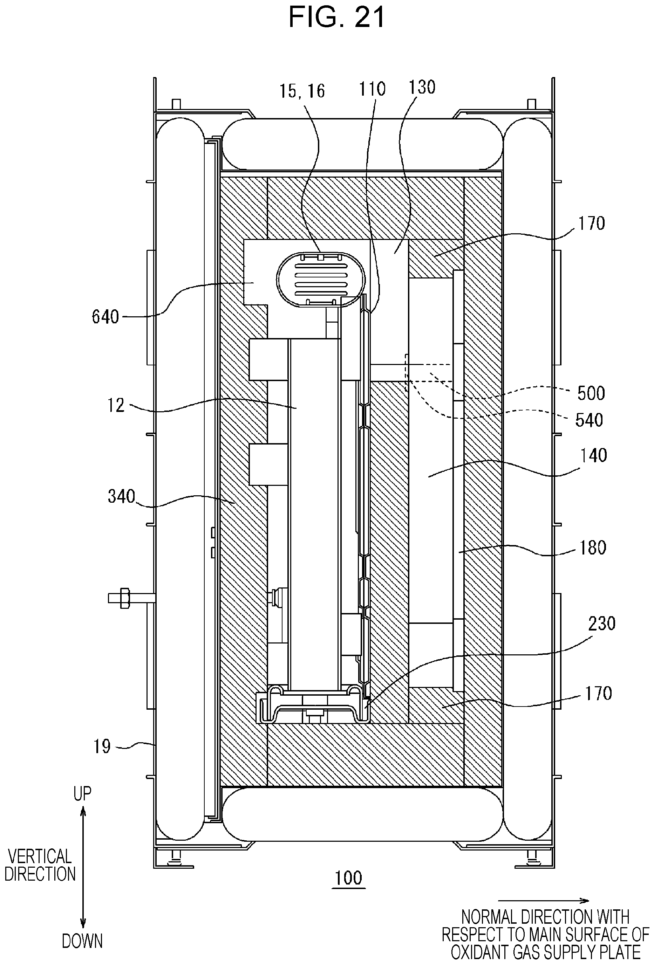

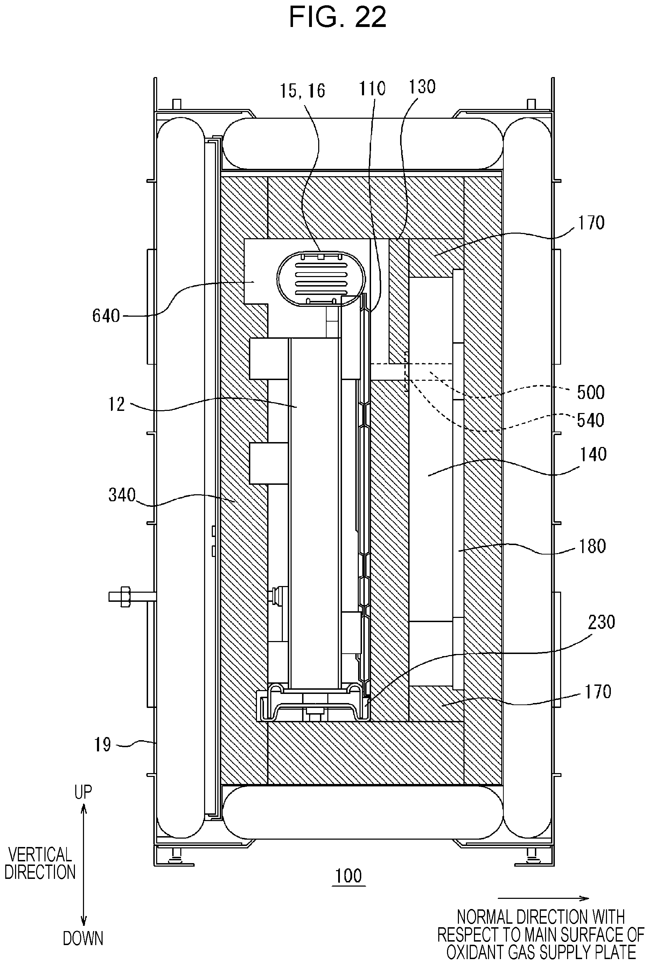

As shown in FIGs. 19 and 20, in the configuration in which the exhaust gas lead-out portion 490 and the supply plate inlet 220 overlap when viewed from the normal direction, the cutout, which is the exhaust gas lead-out portion 490, may pass through the first heat-insulating material 130 in the thickness direction, as shown in FIG. 21. The cutout may be part of the oxidant gas supply plate 110 side in the thickness direction of the first heat-insulating material 130 and not pass through the first heat-insulating material 130, as shown in FIG. 22.

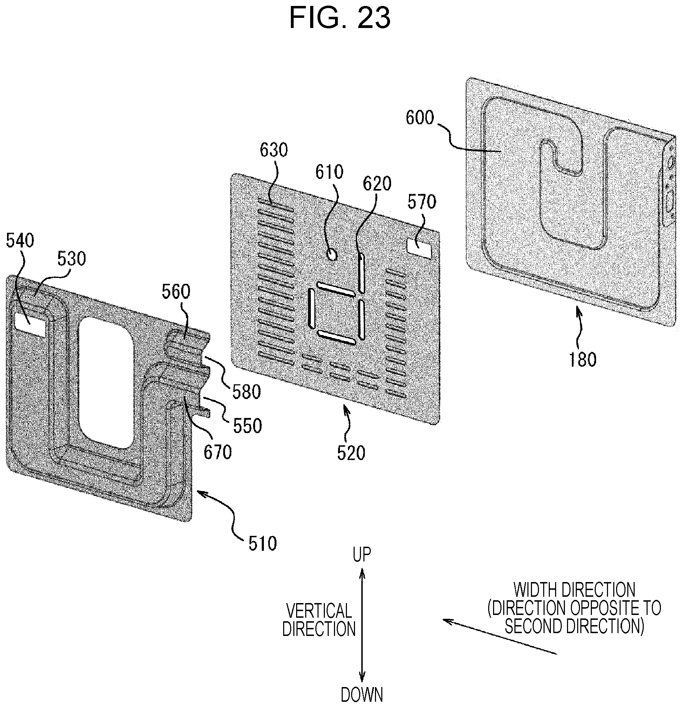

As shown in FIG. 23, in the second embodiment, the first off-gas flow channel 140 may be defined by the first off-gas flow channel portion 510 and a partition plate 520. In other words, the first off-gas flow channel portion 510 and the partition plate 520 may define a part of the first off-gas flow channel 140. The first off-gas flow channel portion 510 may have a first groove portion 530 formed by recessing a part of flat plate into a path-like shape. The first off-gas flow channel portion 510 may be joined to one surface of the partition plate 520. More specifically, the partition plate 520 may be joined to cover the first groove portion 530.

The first off-gas flow channel portion 510 may be arranged so that the flat plate-like portion is parallel to the main surface of the oxidant gas supply plate 110. The first groove portion 530 may have a portion that overlaps a part of the exhaust gas lead-out portion 490 within the fuel cell module 100, when viewed from the normal direction of the main surface. The first groove portion 530 may be shaped such that the aforesaid portion is one end of the path-like shape. The first groove portion 530 may include, for example, a U-shape portion. The U-shaped portion may open on the upward direction side and the both leg portions of the U-shaped portion may extend substantially parallel to each other in the upward direction. A communication hole 540 may be formed in the vicinity of the aforesaid portion of the first groove portion 530.

For example, in the configuration in which the exhaust gas lead-out portion 490 is located in the direction opposite to the second direction as shown in FIG. 18, the communication hole 540 may be formed in the end portion of the leg portion of the U-shaped first groove portion 530 in the direction opposite to the second direction, as shown in FIG. 23.

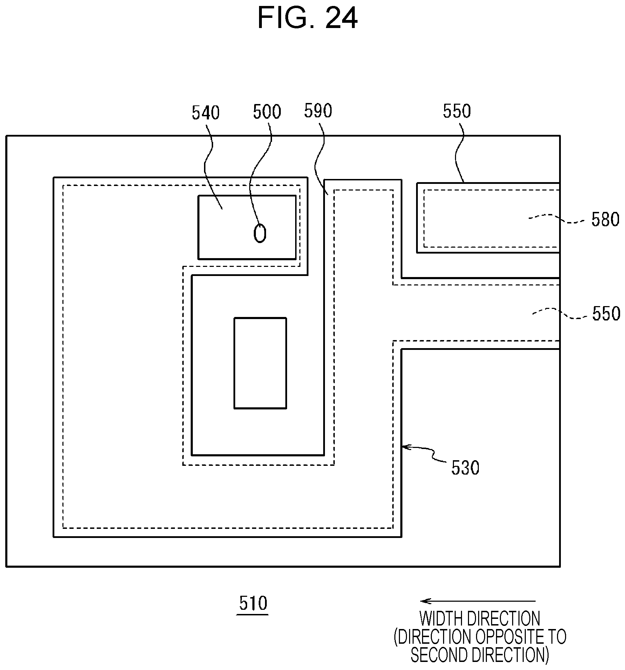

In the configuration in which the exhaust gas lead-out portion 490 is located in the vicinity of the center in the second direction as shown in FIG. 19, the communication hole 540 may be formed in a portion extending in the second direction from the leg portion of the U-shaped portion of first groove portion 530 located in the direction opposite to the second direction, as shown in FIG. 24. Furthermore, in the aforesaid configuration, the communication pipe 500 may be located within the communication hole 540 when viewed from the normal direction of the main surface of the oxidant gas supply plate 110. In other words, the communication pipe 500 may be inserted through the communication hole 540.

The communication hole 540 may be connected to the exhaust gas lead-out portion 490. By connecting the communication hole 540 and the exhaust gas lead-out portion 490, the inner space formed by the joining of the first off-gas flow channel portion 510 and the partition plate 520, in other words, the first off-gas flow channel 140 may communicate with the flow channel defined by the exhaust gas lead-out portion 490. The first groove portion 530 may communicate, at the other end, with a discharge portion 670 having a discharge port 550. The discharge port 550 may discharge the off-gas from the fuel cell module 100.

In a plurality of portions in the first off-gas flow channel portion 510 that extend along the first direction and are located at different positions in a direction intersecting the first direction, for example, in the width direction, the width of the portion on the discharge port 550 side where the off-gas is discharged from the fuel cell module 100 may be narrower than the width of the portion on the inlet side where the off-gas discharged from the fuel cell stack 12 flows in. More specifically, in the U-shaped portion of the first groove portion 530 of the first off-gas flow channel portion 510, the width of the leg portion on the discharge port 550 side may be narrower than the width of the leg portion on the communication hole 540 side. Furthermore, in the first off-gas flow channel portion 510, the width of the leg portion on the side of the communication hole 540 may be narrower than the width of the portion on the side of the discharge port 550. Furthermore, the width of the portion connecting both leg portions of the U-shaped portion of the first groove portion 530 may be narrower than the width of the leg portion on the communication hole 540 side and the width of the leg portion on the discharge port 550 side.

The portion of the first off-gas flow channel portion 510 on the off-gas inflow side (on the communication hole 540 side), specifically the leg portion, may be filled with a pretreatment material. The pretreatment material may adsorb Si contained in the off-gas as it flows in contact with the off-gas. The portion of the first off-gas flow channel portion 510 on the discharge port 550 side, specifically the leg portion, may be filled with a combustion catalyst. The combustion catalyst may burn the combustible gases such as hydrogen and carbon monoxide contained in the off-gas. In the first off-gas flow channel portion 510, the combustion catalyst may be located on the second direction side within the fuel cell module 100.

The first off-gas flow channel portion 510 may have an oxidant gas introducing portion 560. The oxidant gas introducing portion 560 may be a pipe, or may be groove-shaped by recessing the flat plate of the first off-gas flow channel portion 510 in the same direction as the first groove portion 530. The oxidant gas introducing portion 560 may be joined to the partition plate 520 to cover the groove. When joined to the partition plate 520, the oxidant gas introducing portion 560 may not be in communication with the first groove portion 530. The oxidant gas introducing portion 560 may communicate with an oxidant gas flow channel, which is to be described later, via a first through-hole 570 formed in the partition plate 520.

One end of the oxidant gas introducing portion 560 may function as an oxidant gas introducing port 580. The oxidant gas introducing port 580 may introduce the oxidant gas to be supplied to the fuel cell stack 12 into the fuel cell module 100 via the oxidant gas flow channel. The oxidant gas introducing portion 560 may be located in the vicinity of the discharge port 550. The oxidant gas introducing portion 560 may be separate from the first off-gas flow channel portion 510. In the configuration in which the oxidant gas introducing portion 560 is separate from the first off-gas flow channel portion 510, the oxidant gas introducing portion 560 may be located on the surface of the partition plate 520 to which the first off-gas flow channel portion 510 is joined.

The oxidant gas introducing port 580 may be located on the upward direction (first direction) side from the discharge port 550 within the fuel cell module 100.

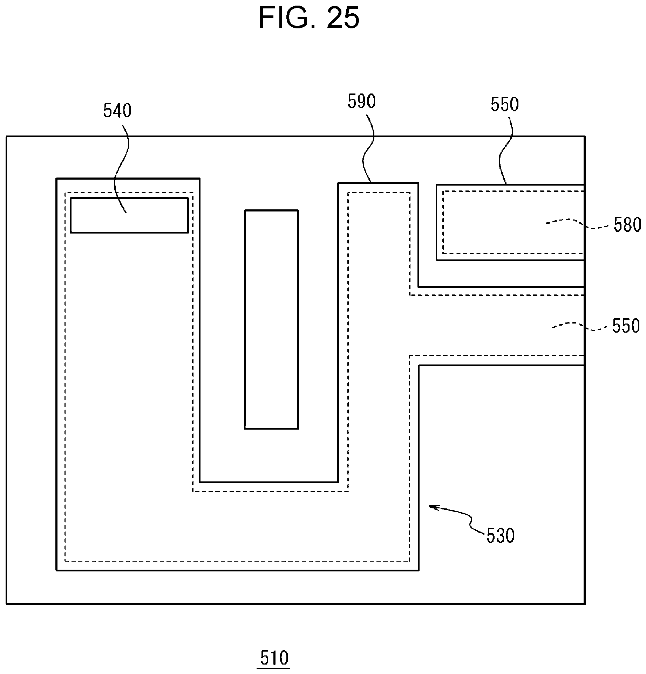

As shown in FIG. 25, the first off-gas flow channel portion 510 may have an extension portion 590 that branches in the vicinity of the discharge port 550 and extends toward the vicinity of the oxidant gas introducing portion 560. More specifically, the extension portion 590 branches from the first groove portion 530. The extension portion 590 may be groove-shaped, similar to the first groove portion 530. The groove in the extension portion 590 may communicate with the first groove portion 530.

As shown in FIG. 13, the second heat-insulating material 170 is located outside the first heat-insulating material 130 in the normal direction of the oxidant gas supply plate 110, similar to the first embodiment. In other words, the second heat-insulating material 170 may be located further away from the oxidant gas supply plate 110 than the first heat-insulating material 130. The second heat-insulating material 170 may be located circumferentially around the first off-gas flow channel 140 and the oxidant gas flow channel portion 18 with a straight line parallel to the normal of the main surface of the oxidant gas supply plate 110 as an axis. The second heat-insulating material 170 may have a frame-like shape with a rectangular hollowed-out interior and may be constituted by combining a plurality of heat-insulating materials. The second heat-insulating material 170 may be arranged so that the end surface along the axial direction is in surface contact with the main surface of the first heat-insulating material 130.

The oxidant gas flow channel portion 180 may be joined to the other side of the partition plate 520 to which the first off-gas flow channel portion 510 is joined. The oxidant gas flow channel portion 180 may be positioned to overlap the first off-gas flow channel portion 510 when viewed from the normal direction of the main surface of the partition plate 520. The oxidant gas flow channel may be defined by joining the oxidant gas flow channel portion 180 to the partition plate 520. More specifically, the oxidant gas flow channel may be defined by joining the oxidant gas flow channel portion 180 to the partition plate 520 to cover a second groove portion 600, which is obtained by recessing a part of the flat plate into a path-like shape. The recessed depth of the second groove portion 600 may be shallower than the recessed depth of the first groove portion 530.

The oxidant gas flow channel portion 180 may be arranged so that the flat plate portion is parallel to the main surface of the oxidant gas supply plate 110. Apart of the oxidant gas flow channel portion 180 may overlap the entire area of the first off-gas flow channel portion 510 within the fuel cell module 100, when viewed from the normal direction of the main surface of the partition plate 520. More specifically, a part of the second groove portion 600 may overlap the entire area of the first groove portion 530, when viewed from the aforesaid normal direction. The oxidant gas flow channel portion 180 may overlap the extension portion 590 when viewed from the aforesaid normal direction.

The second groove portion 600 may have a part overlapping the entire supply plate inlet 220 within the fuel cell module 100, when viewed from the normal direction of the aforesaid main surface. The second groove portion 600 may be shaped such the aforesaid part is one end of the path-like shape. The aforesaid part may communicate with the inner space IS of the oxidant gas supply plate 110 via the communication pipe 500 and the supply plate inlet 220. The second groove portion 600 may have a part overlapping the oxidant gas introducing portion 560 at the other end of the path-like shape within the fuel cell module 100. The aforesaid may communicate, via the first through-hole 570, with the space defined by the oxidant gas introducing portion 560. The second groove portion 600 may include, for example, a U-shaped portion.

The partition plate 520 may have a second through-hole 610 through which the communication pipe 500 passes.

The partition plate 520 may have a cutout 620. Within the fuel cell module 100, the cutout 620 may be located at least partially in an area other than the area where it overlaps the first off-gas flow channel 140 and the second groove portion 600 that defines the oxidant gas flow channel, when viewed from the normal direction of the main surface of the partition plate 520. More specifically, the cutout 620 may be located at least partially in an area other than the area where it overlaps the first groove portion 530 and the second groove portion 600, when viewed from the aforesaid normal direction. The cutout 620 may also be provided along the first off-gas flow channel 140, in the central portion of the U-shape of first off-gas flow channel 140, more specifically, of the first groove portion 530. The cutout 620 may be provided around the first off-gas flow channel 140 and the second groove portion 600 that defines the oxidant gas flow channel.

The partition plate 520 may have a raised portion 630 protruding into the first groove portion 530 within the fuel cell module 100 in the area overlapping both the first groove portion 530 and the second groove portion 600, when viewed from the normal direction of the main surface of the partition plate 520. With such a configuration, the heat exchange efficiency between the first off-gas flow channel portion 510 and the oxidant gas flow channel portion 180 can be improved.

Similar to the first embodiment, a third heat-insulating material 340 may be provided around the inner space within the housing 19 where the oxidant gas supply plate 110, the fuel cell stack 12, the reformer 15, and the vaporizer 16 are provided, except for the portion where the first heat-insulating material 130 is provided.

The third heat-insulating material 34 may have a portion extending along the upward direction (first direction) on the opposite side of the oxidant gas supply plate 110 of the fuel cell stack 12. In the aforesaid portion, a recessed portion 640 may be formed in the vicinity of the location of the reformer 15 in the upward direction, when viewed from the fuel cell stack 12 side. A gap may be provided between the recessed portion 640 and the reformer 15.

Similar to the first embodiment, in the fuel cell module 100 of the second embodiment with the above-described configuration, the oxidant gas supply plate 110 is positioned to be separated away from the inner wall of the housing 19 on the upward direction side, and the second plate portion 21, which is a surface facing the fuel cell stack 12, and the first plate portion 20, which is a surface on the opposite side of the fuel cell stack 12, are connected directly or indirectly to the housing 19 so that the space of the oxidant gas supply plate 110 on the fuel cell stack 12 side communicates with the space on the opposite side. Thus, similar to the first embodiment, in the fuel cell module 100, the oxidant gas supply plate 110 is heated not only by the opposing fuel cell stack 12, but also by the off-gas, so that the oxidant gas flowing inside the oxidant gas supply plate 110 can also be heated. Similar to the first embodiment, it is also easy for the fuel cell module 100 to release thermal stress, especially in the vertical direction of the oxidant gas supply plate 11, so that deformation of the oxidant gas supply plate 11 can be suppressed.

In the fuel cell module 100 of the second embodiment, the off-gas outlet in the fuel cell stack 12 is located on the opposite side of the first direction than the distal end of the inner space IS of the oxidant gas supply plate 110. With such a configuration, the fuel cell module 100 can absorb more combustion heat generated in the fuel cell stack 12 by the oxidant gas in the oxidant gas supply plate 110. Thus, the fuel cell module 100 can improve power generation efficiency.

Similar to the first embodiment, in the fuel cell module 100 of the second embodiment, the oxidant gas supply plate 110 has the first plate portion 200 and the second plate portion 210 located opposite each other, the first plate portion 200 has the supply plate inlet 220, the second plate portion 210 has the supply plate outlet 230, and the supply plate inlet 220 is provided in the vicinity of the center of the fuel cell stack 12 in the stacking direction. With such a configuration, the fuel cell module 100 can also reduce difference in temperature distribution in the stacking direction of the fuel cell stack 12.

The fuel cell module 100 of the second embodiment is provided, between the supply plate inlet 220 and the supply plate outlet 230, with a flow regulating portion 280 in at least one of the first plate portion 200 and the second plate portion 210 that rises from the one to the other and at least extends, when viewed from the normal direction of the main surface of the oxidant gas supply plate 110, in a direction intersecting the direction from the supply plate inlet 220 to the supply plate outlet 230. With such a configuration, the fuel cell module 100 has the effect of spreading the oxidant gas in the direction intersecting the direction from the supply plate inlet 220 to the supply plate outlet 230.

In the fuel cell module 100 of the second embodiment, the flow regulating portion 280 has at least one first flow regulating portion 281 in at least one of the first plate portion 200 and the second plate portion 210 that rises from the one to the other and contacts the other, and the first flow regulating portion 281 proximate to the supply plate inlet 220 is curved in a direction from the supply plate outlet 230 to the supply plate inlet 220, when viewed from the normal direction of the main surface of the oxidant gas supply plate 110. With such a configuration, the fuel cell module 100 can allow oxidant gas flowing from the supply plate inlet 220 into the oxidant gas supply plate 110 to stay in the opposite direction from the supply plate outlet 230. Therefore, the fuel cell module 100 can effectively absorb the heat generated in the fuel cell stack 12 by the oxidant gas.

In the fuel cell module 100 of the second embodiment, the flow regulating portion 280 has the second flow regulating portion 282 in at least one of the first plate portion 200 and the second plate portion 210, the second flow regulating portion 282 having a gap in the facing direction between the first plate portion 200 and the second plate portion 210 while rising from the one to the other. With such a configuration, the fuel cell module 100 can spread the oxidant gas flowing in from the supply plate inlet 220 over the entire oxidant gas supply plate 110, and since the second flow regulating portion 282 has a gap, thermal deformation of the oxidant gas supply plate 110 can be suppressed.

In the second embodiment of the fuel cell module 100, the portion of the second plate portion 210 opposite the supply plate inlet 220 is recessed to the side opposite to the first plate portion 200. With such a configuration, the fuel cell module 100 can reduce the pressure loss when the oxidant gas flowing into the oxidant gas supply plate 110 impacts the inner wall of the second plate portion 210.

The fuel cell module 100 of the second embodiment is provided with the exhaust gas lead-out portion 490 that, in the flow of the off-gas discharged from the fuel cell stack 12 toward the reformer 15 side, causes the off-gas to flow toward the center of the housing 19 in the second direction. With such a configuration, the fuel cell module 100 can discharge the off-gas uniformly from both sides in the second direction within the housing 19.

The fuel cell module 100 of the second embodiment is provided with the exhaust gas lead-out portion 490 that, in the flow of the off-gas discharged from the fuel cell stack 12 toward the reformer 15 side, causes the off-gas to flow toward the opposite side of the second direction. With such a configuration, the fuel cell module 100 can increase the outlet temperature of the reformer 15 by the high-temperature off-gas. Thus, the fuel cell module 100 can improve the power generation efficiency of the fuel cell stack 12.

The fuel cell module 100 of the second embodiment is further provided with the heat-insulating material 340 that extends along the second direction on the opposite side of the oxidant gas supply plate 110 of the fuel cell stack 12, and in which the recessed portion 640 is formed in the vicinity of the location of the reformer 15 in the first direction when viewed from the fuel cell stack 12 side, the reformer 15 having a gap with the recessed portion 640. With such a configuration, in the fuel cell module 100, since the off-gas can stay in the recessed portion 640, the temperature of the reformer 15 can be increased. Thus, the fuel cell module 100 can improve the power generation efficiency of the fuel cell stack 12.

In the fuel cell module 100 of the second embodiment, the width of the inner space IS of the oxidant gas supply plate 110 on the first direction side in the width direction is longer than the width on the side opposite to the first direction. With such a configuration, the fuel cell module 100 causes the first direction side of the oxidant gas supply plate 110 to face the first direction side of the fuel cell stack 12 where the temperature is higher, thus maintaining a larger area facing the fuel cell stack 12 and slowing the flow of the oxidant gas in the inner space IS; therefore, the efficiency of heat exchange can be improved. In addition, in the fuel cell module 100 having the above-described configuration, since the area facing the fuel cell stack 12, in the opposite side of the first direction of the fuel cell stack 12 where the temperature is relatively low, is small, the decrease in heat of the heated oxidant gas can be suppressed.

In the fuel cell module 100 of the second embodiment, the width of the inner space IS in the first direction side is longer than the width of the fuel cell stack 12. With such a configuration, the fuel cell module 100 can increase the heat exchanged between the heat emitted by the fuel cell stack 12 and the oxidant gas in the inner space IS of the oxidant gas supply plate 110. In the fuel cell module 100, the width of the inner space IS in the opposite side of the first direction is the same as the width of the fuel cell stack 12. With such a configuration, the fuel cell module 100 can homogenize the supply of oxidant gas to the fuel cell stack 12 via the supply plate outlet 230 in the second direction, while reducing the heat loss of the oxidant gas.

Although the embodiments according to the present disclosure have been described based on the drawings and the examples, it is to be noted that various changes and modifications may be made easily by those who are ordinarily skilled in the art based on the present disclosure. Thus, it is to be noted that such changes and modifications are included in the scope of the present disclosure. For example, functions and the like included in each component, each step or the like can be rearranged without logical inconsistency, and a plurality of components, steps or the like can be combined into one or divided. Although the embodiment according to the present disclosure has been described focusing on the device, the embodiment according to the present disclosure can also be realized as a method including steps executed by each component of the device. The embodiments according to the present disclosure can also be realized as a method and a program executed by a processor included in the device, or a storage medium on which a program is recorded. It is to be understood that the scope of the present disclosure includes these as well.

For example, in the first embodiment, the flange portion 41 on the traveling direction side of the off-gas channel plate 38 functions as a cover portion, but the hole-like heat-insulating portion 25 may be covered by a cover portion that is separate from the off-gas channel plate 38.

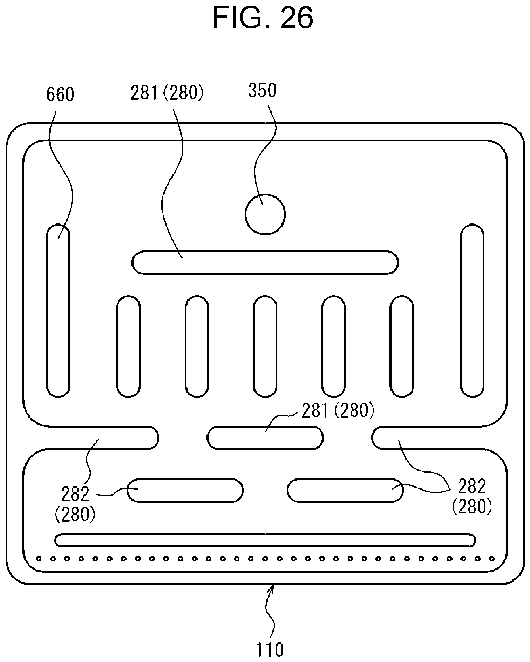

Further, in the second embodiment, the structure of the oxidant gas supply plate 110 is not limited to the above, but may have a fourth projection 660 that rises on the fuel cell stack 12 side within the fuel cell module 100, as shown in FIG. 26, for example.

The descriptions such as "first" and "second" in the present disclosure are identifiers for distinguishing corresponding configurations. Configurations distinguished by the descriptions such as "first" and "second" in the disclosure can exchange numbers in the corresponding configurations. For example, a first camera can exchange "first" and "second", which are identifiers, with a second camera. The exchange of identifiers takes place at the same time. Even after exchanging identifiers, the corresponding configuration is distinguished. The identifier may be deleted. The configuration with the identifier deleted is distinguished by a reference sign. It may not be used as a basis for interpreting the order of the corresponding configurations and the existence of identifiers with lower numbers, based on the description of identifiers such as "first" and "second" in this disclosure.

### REFERENCE SIGNS

10, 100 fuel cell module
11, 110 oxidant gas supply plate
12 fuel cell stack
13, 130 opposite wall
14, 140 first off-gas flow channel
15 reformer
16 vaporizer
17, 170 second heat-insulating material
18, 180 oxidant gas flow channel portion
19 housing
20, 200 first plate portion
21, 210 second plate portion
22, 220 supply plate inlet
23, 230 supply plate outlet
24 isolating portion
25 heat-insulating portion
26 first projection
27 second projection
28, 280 flow regulating portion
29 groove
30 second portion
31 inlet of oxidant gas flow channel portion
32 third portion
33 fourth portion
34, 340 third heat-insulating material
35, 350 third projection
36 extended portion
37 manifold
38 off-gas channel plate
39 flat plate portion
40 side wall portion
41 flange portion
42 discharge hole
43 second groove
44 off-gas treatment chamber
45 communication hole
46 third groove
47 guide portion
48 first portion
490 exhaust gas lead-out portion
500 communication pipe
510 first off-gas flow channel portion
520 partition plate
530 first groove portion
540 communication hole
550 discharge port
560 oxidant gas introducing portion
570 first through-hole
580 oxidant gas introducing port
590 extension portion
600 second groove portion
610 second through-hole
620 cutout
630 raised portion
640 recessed portion
650 support portion
660 fourth projection
IS inner space

## Claims

1. A fuel cell module comprising:
a housing;
a fuel cell stack arranged within the housing; and
an oxidant gas supply plate that is arranged adjacent to the fuel cell stack within the housing and that has an inner space for flowing an oxidant to be supplied to the fuel cell stack,
wherein the oxidant gas supply plate is positioned separated away from an inner wall of the housing on a first direction side so that a space of the oxidant gas supply plate on the fuel cell stack side communicates with a space of the fuel cell stack on the side opposite to the fuel cell stack side; the oxidant gas supply plate has a surface facing the fuel cell stack and a surface on the opposite side of the fuel cell stack, both being connected directly or indirectly to the housing.

2. The fuel cell module according to claim 1, wherein an off-gas outlet of the fuel cell stack is located flush with the distal end of the inner space of the oxidant gas supply plate or on the first direction side of the inner space of the oxidant gas supply plate in the first direction.

3. The fuel cell module according to claim 1, wherein an off-gas outlet of the fuel cell stack is located on the opposite side of the first direction than the distal end of the inner space of the oxidant gas supply plate.

4. The fuel cell module according to any one of claims 1 to 3, wherein
the oxidant gas supply plate has a first plate portion and a second plate portion located opposite each other,
the first plate portion has a supply plate inlet,
the second plate portion has a supply plate outlet, and
the supply plate inlet is provided in the vicinity of the center of the fuel cell stack in a stacking direction.

5. The fuel cell module according to claim 4, wherein the oxidant gas flows into the oxidant gas supply plate from the supply plate inlet, flows in one direction within the oxidant gas supply plate, then turns back and flows out from the supply plate outlet.

6. The fuel cell module according to claim 5, wherein
the supply plate inlet and the supply plate outlet are located at different positions, when viewed from the normal direction of a main surface of the oxidant gas supply plate, and
the oxidant gas supply plate has a heat-insulating portion between the supply plate inlet and the supply plate outlet, when viewed from the normal direction of the main surface of the oxidant gas supply plate.

7. The fuel cell module according to claim 6, further comprising:
a cover portion that covers the heat-insulating portion.

8. The fuel cell module according to any one of claims 4 to 7, wherein the oxidant gas supply plate has an isolating portion that is located at least between the supply plate inlet and the supply plate outlet, when viewed from the normal direction of the main surface of the oxidant gas supply plate, and that partially divides the inner space into an inner space on the supply plate inlet side and an inner space on the supply plate outlet side.

9. The fuel cell module according to claim 8, wherein the isolating portion is substantially linearly symmetrical with respect to a straight line connecting the supply plate inlet and the supply plate outlet, when viewed from the normal direction of the main surface of the oxidant gas supply plate.

10. The fuel cell module according to claim 8 or 9, wherein the isolating portion has portions extending from the supply plate outlet to the supply plate inlet side on both sides of a line segment connecting the supply plate inlet and the supply plate outlet, when viewed from the normal direction of the main surface of the oxidant gas supply plate.

11. The fuel cell module according to claim 4, wherein a flow regulating portion is provided, between the supply plate inlet and the supply plate outlet, in at least one of the first plate portion and the second plate portion, the flow regulating portion rising from the one to the other and at least extending, when viewed from the normal direction of the main surface of the oxidant gas supply plate, in a direction intersecting the direction from the supply plate inlet to the supply plate outlet.

12. The fuel cell module according to claim 11, wherein
the flow regulating portion has at least one first flow regulating portion in at least one of the first plate portion and the second plate portion, the first flow regulating portion rising from the one to the other and contacting the other, and
the first flow regulating portion proximate to the supply plate inlet is curved in a direction from the supply plate outlet to the supply plate inlet, when viewed from the normal direction of the main surface of the oxidant gas supply plate.

13. The fuel cell module according to claim 11 or 12, wherein the flow-regulating portion has a second flow regulating portion in at least one of the first plate portion and the second plate portion, the second flow regulating portion having a gap in a facing direction between the first plate portion and the second plate portion while rising from the one to the other.

14. The fuel cell module according to any one of claims 4 to 13, wherein a portion of the second plate portion facing the supply plate inlet is recessed to the side opposite to the first plate portion.

15. The fuel cell module according to any one of claims 1 to 14, further comprising:
a reformer located in the first direction from the fuel cell stack, the reformer having a reforming portion that generates, by performing water vapor reforming, a gas to be supplied to the fuel cell stack within the housing, and a vaporizing portion that is located in a second direction, which is a direction intersecting the first direction, from the reforming portion and that vaporizes water to supply a water vapor to the reforming portion; and
an exhaust gas lead-out portion that causes, in the flow of an off-gas discharged from the fuel cell stack to the reformer side, the off-gas to flow toward the center of the housing in the second direction.

16. The fuel cell module according to any one of claims 1 to 14, further comprising:
a reformer located in the first direction from the fuel cell stack, the reformer having a reforming portion that generates, by performing water vapor reforming, a gas to be supplied to the fuel cell stack within the housing, and a vaporizing portion that is located in a second direction, which is a direction intersecting the first direction, from the reforming portion and that vaporizes water to supply a water vapor to the reforming portion; and
an exhaust gas lead-out portion that causes, in the flow of an off-gas discharged from the fuel cell stack to the reformer side, the off-gas to flow toward the opposite side of the second direction.

17. The fuel cell module according to claims 15 or 16, further comprising:
a heat-insulating material on the opposite side of the fuel cell stack from the oxidant gas supply plate, the heat-insulating material having a recessed portion formed in the vicinity of the location of the reformer in the first direction, when viewed from the fuel cell stack side, the recessed portion extending along the second direction.

18. The fuel cell module according to any one of claims 1 to 17, wherein, in the first direction and a width direction perpendicular to the normal direction of the main surface of the oxidant gas supply plate, a width of the inner space of the oxidant gas supply plate on the first direction side is larger than a width of the inner space of the oxidant gas supply plate on the opposite side of the first direction.

19. The fuel cell module according to claim 18, wherein
the width of the inner space on the first direction side is larger than the width of the fuel cell stack, and
the width of the inner space on the opposite side of the first direction is the same as the width of the fuel cell stack.

20. A fuel cell device comprising the fuel cell module according to any one of claims 1 to 19.
